# EUROPEAN PATENT SPECIFICATION

(11) **EP 1 253 825 B1**
(45) Date of publication and mention of the grant of the patent: **30.06.2004**
(21) Application number: 01913794.2
(22) Date of filing: 08.02.2001
(51) Int. Cl.: A01N 47/36

(54) **NOVEL USE OF HERBICIDES**
VERWENDUNG VON HERBIZIDEN
NOUVELLE UTILISATION D'HERBICIDES

(30) Priority: 10.02.2000 CH 275002000
(43) Date of publication of application: 06.11.2002
(73) Proprietor: Syngenta Participations AG, 4058 Basel (CH)
(72) Inventor: ALLEN, James, CH-4058 Basel (CH); RÜEGG, Willy, T., Greensboro, NC 27409 (US); BOUTSALIS, Peter, Bracknell Berkshire RG42 6EY (GB); ALLARD, Jean-Louis Syngenta Crop Protection Ltd., Bangrak Bangkok 10500 (TH)
(74) Representative: Bastian, Werner Maria
(86) International application number: PCT/EP2001/001360
(87) International publication number: WO 2001/058264

(56) References cited:
- WO-A-00/52006
- WO-A-97/41112

## Description

The present invention relates to the use of herbicidally active salts of N-[3-(2-trifluoroethoxy)-pyridin-2-yl-sulfonyl]-N'-(4,6-dimethoxy-pyrimidin-2-yl)-urea in certain herbicide-tolerant crops of useful plants, especially in herbicide-tolerant crops of maize, soybeans and rice.

The use of herbicides can result in considerable damage also being caused to cultivated plants, for example in dependence upon the concentration of the herbicide and the mode of its application, the cultivated plant, the nature of the soil and the climatic conditions, such as period of exposure to light, temperature and amounts of precipitation. Selective weed control can be achieved, however, by using the herbicide in crops in which the useful plant has been rendered more or less resistant to the phytotoxic action of the herbicide by means of breeding methods or genetic techniques.

Herbicide-tolerant crops of useful plants are generally resistant to the phytotoxic action of herbicides the action of which is based on a specific mechanism (for example acetolactate synthase-inhibitors). It has been shown, however, that such herbicides, despite having a common mode of action on the cultivated plants resistant to that class of herbicide, are often very variable in their action, that is to say, depending upon the molecular structure of the herbicide and the rate of application, there are considerable differences in the tolerance behaviour of the cultivated plant. Accordingly, a certain herbicide is frequently suitable only for a specific variety of cultivated plant.

WO 97/41218 describes, for example, rice plants that are tolerant to the phytotoxic action of the herbicides imazethapyr, imazaquin, primisulfuron, nicosulfuron, sulfometuron, imazapyr, imazameth and imazamox. US-A-4 761 373 disdoses maize plants that are resistant to the phytotoxic action of certain suffonamides, e.g. chlorsulfuron.

WO 97/41112 discloses that certain salts of N-[3-(2-trifluoroethoxy)-pyridin-2-yl-sulfonyl]-N'-(4,6-dimethoxy-pyrimidin-2-yl]-urea are used as herbicides.

It has now been found that certain salts of N-[3-(2-trifluoroethoxy)-pyridin-2-yl-sulfonyl]-N'-(4,6-dimethoxy-pyrimidin-2-yl)-urea are excellently suitable for controlling weeds in herbicide-tolerant crops selected from maize, rice and soybeans.

According to the invention, therefore, there is proposed a method of controlling undesirable plant growth in herbicide-tolerant crops of useful plants selected from maize, rice and soybeans, in which method a compound of formula I 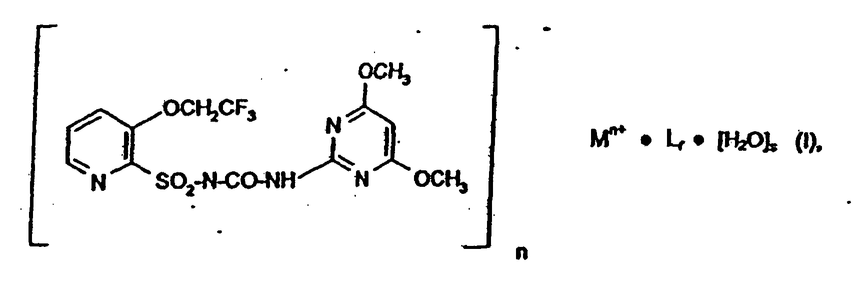 wherein
M is an alkali metal or alkaline earth metal;
n is 1 or 2;
r and s are each independently of the other 0, 1/2, 1, 1 1/2, 2, 2 1/2 or 3; and
L is ethyl acetate, acetonitrile, dimethyl sulfoxide, dimethylformamide, dimethylacetamide,
N-methyl-2-pyrrolidone, acetone, butanone, methylene chloride, trichloromethane, trichloroethane, tetrahydrofuran, diethyl ether, 1,2-dimethoxyethane, dioxane, methyl tert-butyl ether, chlorobenzene, toluene or xylene, is applied in a herbicidally effective amount to the plants or to the locus thereof.

M as an alkali metal or alkaline earth metal in the context of the present invention is preferably sodium, potassium, magnesium or calcium.

The present invention indudes all crystal modifications that can be formed by the compounds of formula I.

Compounds of formula I that are preferred for the method according to the invention are those wherein L is dioxane or tetrahydrofuran . Also preferred are compounds of formula I wherein n is 1, M being especially sodium.

Preference is also given to compounds of formula I wherein M is sodium, n is 1, r is 0 and s is 0.

For the method according to the invention special mention should also be made of the amorphous solid form of the compound of formula I wherein M is sodium, n is 1, r is 0 and s is 0. For example, the amorphous solid form can be used in the preparation of other crystal modifications, such as the C modification.

As individual compounds from the scope of formula I that are very especially preferred for use in the method according to the invention there may be mentioned those compounds selected from
a) the B modification of the compound of formula I wherein M is sodium, n is 1, r is 0 and s is 1, characterised by the X-ray powder pattern having d[Å]/intensity: 10.0/medium; 9.2/strong; 8.6/very weak; 8.1/weak; 7.2/strong; 6.9/strong; 6.4/medium; 5.82/strong; 5.75/strong; 5.64/very strong; 5.53/very weak; 5.13/medium; 4.97/very strong; 4.65/medium; 4.30/very strong; 4.22/weak; 4.15/very weak; 4.02/weak; 3.94/weak; 3.79/medium; 3.73/weak; 3.68/medium; 3.61/weak; 3.58/weak; 3.52/very strong; 3.42/very weak; 3.37/weak; 3.31/very weak; 3.27/very weak; 3.23/weak; 3.18/medium; 3.08/very weak; 3.03/very weak; 2.95/very weak; 2.87/strong; 2.82/very weak; 2.79/very weak; 2.73/very weak; 2.68/very weak; 2.65/very weak; 2.63/very weak; 2.60/weak; 2.57/Weak;
b) the J modification of the compound of formula I wherein M is sodium, n is 1, L is tetrahydrofuran, r is 1/2 and s is 0, characterised by the X-ray powder pattern having d[Å]/intensity: 15.7/weak; 10.2/very strong; 8.2/weak; 7.8/weak; 7.3/weak; 6.7/weak; 6.5/very weak; 6.2/medium; 5.64/very weak; 5.53/weak; 5.42/weak; 5.09/weak; 4.96/medium; 4.86/very weak; 4.60/medium; 4.37/medium; 4.24/weak; 4.11/very strong; 3.95/very weak; 3.90/weak; 3.81/very weak; 3.71/medium; 3.62/weak; 3.52/very weak; 3.43/strong; 3.37/weak; 3.32/very weak; 3.27/weak; 2.94/very weak; 2.82/medium;
c) the K modification of the compound of formula I wherein M is sodium, n is 1, r is 0 and s is 0, characterised by the X-ray powder pattern having d[Å]/intensity: 13.4/weak; 10.1/very weak; 9.3/very strong; 7.8/weak; 6.9/very weak; 6.7/very weak; 5.63/very weak; 5.35/medium; 4.66/weak; 4.44/very weak; 4.35/weak; 4.12/strong; 3.94/strong; 3.87/very weak; 3.76/weak; 3.61/medium; 3.49/very weak; 3.40/very weak;
d) the C modification of the compound of formula I wherein M is sodium, n is 1, r is 0 and s is 1, characterised by the X-ray powder pattern having d[Å]/intensity: 13.1/medium; 11.0/very strong; 8.8/weak; 7.7/very strong; 7.2/very strong; 7.0/weak; 6.4/weak; 6.2/strong; 5.96/weak; 5.90/weak; 5.64/strong; 5.47/weak; 5.34/medium; 5.19/weak; 4.79/weak; 4.74/medium; 4.64/very weak; 4.55/strong; 4.47/weak; 4.35/strong; 4.26/medium; 4.13/weak; 4.06/very weak; 3.92/very strong; 3.87/weak; 3.79/very strong; 3.67/weak; 3.61/medium; 3.58/strong; 3.47/weak; 3.32/very weak; 3.24/medium; 3.14/weak; 3.12/weak; 3.07/weak; 3.04/strong; 2.97/very weak; 2.92/very weak; 2.88/weak; 2.82/weak; 2.77/very weak; 2.74/very weak; 2.69/weak; 2.66/very weak; and
e) the I modification of the compound of formula I wherein M is sodium, n is 1, L is tetrahydrofuran, r is 1 and s is 1, characterised by the X-ray powder pattern having d[Å]/intensity: 11.6/weak; 9.8/very weak; 8.0/very strong; 7.6/medium; 6.7/strong; 6.4/very weak; 6.3/weak; 6.1/very weak; 5.80/medium; 5.66/very weak; 5.47/strong; 5.12/very weak; 5.08/very weak; 4.84/weak; 4.76/weak; 4.47/strong: 4.40/weak; 4.21/medium; 4.19/medium; 4.15/very weak; 4.00/very weak; 3.93/very weak; 3.84/medium; 3.72/very strong; 3.58/medium; 3.52/medium; 3.32/very weak; 3.28/very weak; 3.25/very weak; 3.11/very weak; 3.07/very weak; 2.95/very weak; 2.86/weak; 2.82/very weak; 2.75/very weak; 2.57/weak; 2.49/very weak.

Preference is also given to
a) the K modification of the compound of formula I wherein M is sodium, n is 1, r is 0 and s is 0, prepared by drying the compound of formula I wherein M is sodium n is 1, L is tetrahydrofuran, r is 1/2 and s is 0 (J modification) at a temperature of from 35°C to 65°C *in vacuo*;
b) the C modification of the compound of formula I wherein M is sodium, n is 1, r is 0 and s is 1, prepared by either
   i) bringing the substantially amorphous form (A modification) into contact with air of 98 % relative humidity, or
   ii) adding water to the K modification of the compound of formula I wherein M is sodium,
      n is 1, r is 0 and s is 0, in a ratio of water to K modification of from 0.1 : 1 to 0.4 : 1 and separating off and drying the resulting product at a temperature of 30-90°C and a pressure of from 1 to 10 kPa;
   c) the B modification of the compound of formula I wherein M is sodium, n is 1, r is 0 and s is 1, prepared by adding water to the compound of formula I wherein M is sodium, n is 1 and L, r and s are as defined for formula I, in a ratio of water to that compound of from 0.5 : 1 to 20 : 1, filtering, and drying the filtration residue at a temperature of 30-90°C and a pressure of from 1 to 10 kPa, or preferably prepared by adding water to the compound of formula I wherein M is sodium, n is 1, L is tetrahydrofuran, r is 1/2 and s is 0 (K modification), or to the compound of formula I wherein M is sodium, n is 1, L is tetrahydrofuran, r is 1/2 and s is 0 (J modification), or to the compound of formula I wherein M is sodium, n is 1, L is tetrahydrofuran, r is 1 and s is 1 (I modification), or to the compound of formula I wherein M is sodium, n is 1, r is 0 and s is 1 (C modification), in a ratio of water to K, J, I or C modification of from 0.5 : 1 to 20 :1, filtering, and drying the filtration residue at a temperature of 30-90°C and a pressure of from 1 to 10 kPa.

In the case of the K modification, special mention should be made of the surprisingly high thermodynamic stability and the non-hygroscopic properties. A high degree of stability, especially in the presence of water, is also exhibited by the B modification. That property is especially advantageous for the preparation of formutations of the active ingredient.

The compounds of formula I can be prepared in accordance with a general process by reacting a compound of formula II 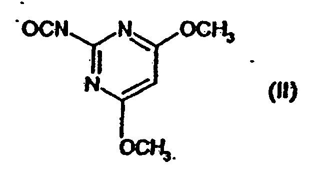 in ethyl acetate, acetonitrile, dimethyl sulfoxide, dimethylformamide, dimethylacetamide, N-methyl-2-pyrrolidone, acetone, butanone, methylene chloride, trichloromethane, trichloroethane, tetrahydrofuran, diethyl ether, 1,2-dimethoxyethane, dioxane, methyl tert-butyl ether, chlorobenzene, toluene or xylene, with a compound of formula V 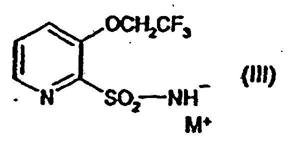 wherein M is as defined for formula I.

The reaction of the compound of formula II with the compound of formula III is carried out at temperatures of from -20°C to 180°C, a temperature range of 30 - 80°C being preferred. The compounds of formulae II and III can be used in equivalent stoichiometric amounts, but a slight excess of isocyanate may be advantageous.

The preparation of the starting compound of formula II is described, for example, in EP-A-0 232 067, page 29. The compounds of formula III can be prepared, for example, by converting a compound of formula IV 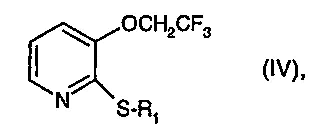 wherein R₁ is -CH₂-phenyl or isopropyl, by aqueous chlorination into the compound of formula V

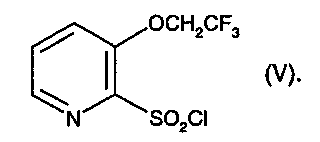

That compound is treated with aqueous ammonia and the resulting sulfonamide is then reacted with 30 % sodium methanolate. Such reactions are known and will be familiar to the person skilled in the art.

Preferred crystal modifications of the compounds of formula I are prepared in accordance with processes especially developed for the present invention.

For example, in the process for the preparation of the J modification of the compound of formula I wherein M is sodium, n is 1, L is tetrahydrofuran, r is 1/2 and s is 0, a 5-25 % by weight solution of 4,6-dimethoxy-pyrimidine-2-isocyanate in anhydrous tetrahydrofuran is added at a temperature of 35-65°C to a 15-35 % by weight suspension of 3-(2-trifluoroethoxy)-pyridinyl-sulfonamide sodium salt in anhydrous tetrahydrofuran.

After the addition of the 4,6-dimethoxy-pyrimidine-2-isocyanate, the reaction mixture is stirred until the conversion is complete. This process is preferably carried out at a temperature of 40-50°C. The J modification so obtained can be separated from the reaction mixture by filtration.

The process for the preparation of the K modification of the compound of formula I wherein M is sodium, n is 1, r is 0 and s is 0 is carried out as follows: a 5-25 % by weight solution of 4,6-dimethoxy-pyrimidine-2-isocyanate in anhydrous tetrahydrofuran is added at a temperature of 35-65°C to a 15-35% by weight suspension of 3-(2-trifluoroethoxy)-pyridinyl-sulfonamide sodium salt in anhydrous tetrahydrofuran, filtration is carried out and the filtration residue (J modification) is then dried at a temperature of 30-90°C and a pressure of from 1 to 10 kPa.

After the addition of the 4,6-dimethoxy-pyrimidine-2-isocyanate, the reaction mixture is stirred until the conversion is complete. For the drying, in this process variant a temperature of 40-60°C and a pressure of from 2 to 6 kPa is preferred.

The process for the preparation of the C modification of the compound of formula I wherein M is sodium, n is 1, r is 0 and s is 1 is carried out as follows: either the substantially amorphous form (A modification) is exposed to air of 98 % relative humidity, or water is added to the K modification in a ratio of water to K modification of from 0.1 : 1 to 0.4 : 1, filtration is carried out and the filtration residue is then dried at a temperature of 30-90°C and a pressure of from 1 to 10 kPa.

For the preparation of the C modification, the ratio of water to K modification may vary from 0.1 : 1 to 0.4 : 1; a ratio of from 0.1 : 1 to 0.3 : 1 is especially preferred. The addition of water can take place at a temperature of 0-60°C, especially at a temperature of 5-40°C. The drying of the C modification is preferably carried out at a temperature of 40-60°C and a pressure of 2 to 6 kPa.

The C modification can advantageously also be prepared by adding N-[(4,6-dimethoxy-2-pyrimidinyl)carbamoyl]-3-(2,2,2-trifluoroethoxy)-pyridine-2-sulfonamide to an aqueous sodium hydroxide solution, then concentrating by evaporation *in vacuo* at a temperature of 50°C, stirring the residue so obtained with diethyl ether, filtering, drying at temperatures of ≥120°C and then exposing the resulting substantial amorphous salt (A modification) to air of 98 % relative humidity.

The process for the preparation of the I modification of the compound of formula I wherein M is sodium, n is 1, L is tetrahydrofuran, r is 1 and s is 1 is carried out as follows: a 5-25 % by weight solution of 4,6-dimethoxy-pyrimidine-2-isocyanate in anhydrous tetrahydrofuran is added at a temperature of from 0 to 30°C to a 10-35 % by weight suspension of 3-(2-trifluoroethoxy)-pyridinylsulfonamide sodium salt in anhydrous tetrahydrofuran and then 1-20 molar equivalents of water relative to the 3-(2-trifluoroethoxy)-pyridinylsulfonamide sodium salt are added. In this variant the addition of 2-5 molar equivalents of water is especially preferred.

The process for the preparation of the B modification of the compound of formula I wherein M is sodium, n is 1, r is 0 and s is 1 is carried out as follows: water is added to the compound of formula I wherein M is sodium, n is 1 and L, r and s are as defined for formula I in a ratio of water to the compound in question of from 0.5 : 1 to 20 : 1, filtration is carried out and the filtration residue is dried at a temperature of 30-90°C and a pressure of from 1 to 10 kPa.

A preferred variant of the process for the preparation of the B modification is earned out as follows: water is added to the compound of formula I wherein M is sodium, n is 1, r is 0 and s is 0 (K modification), or to the compound of formula I wherein M is sodium, n is 1, L is tetrahydrofuran, r is 1/2 and s is 0 (J modification), or to the compound of formula I wherein M is sodium, n is 1, L is tetrahydrofuran; r is 1 and s is 1 (I modification), or to the compound of formula I wherein M is sodium, n is 1, r is 0 and s is 1 (C modification). In a ratio of water to K, J, I or C modification of from 0.5 : 1 to 20 : 1, filtration is carried out and the filtration residue is then dried at a temperature of 30-90°C and a pressure of from 1 to 10 kPa.

The temperature for the addition of water can vary from 0 to 80°C; a temperature of 5-40°C is especially preferred. The drying of the filtration residue can be carried out at temperatures of 30-90°C and a pressure of from 1 to 10 kPa; a temperature of 40-60°C and a pressure of 2 to 6 kPa is preferred. It is especially advantageous to add seed crystals of the B modification to the suspension in order to accelerate the growth of crystals.

The compounds of formula I can be used as herbicides in unmodified form, that is to say as obtained in the synthesis, but they are preferably processed in customary manner together with the adjuvants conventionally employed in formulation technology e.g. into directly sprayable or dilutable solutions, wettable powders, soluble or dispersible powders, soluble of dispersible granules, dusts and so-called "nonaqueous flowables". A composition especially preferred according to the invention is in the form of soluble or dispersible granules and comprises as compound of formula I the crystal modification B.

Formulations suitable for the compounds of formula I are described, for example, on pages 9 to 13 of WO 97/34485. As with the nature of the compositions, the methods of application, such as spraying, atomising, dusting, wetting, scattering or pouring, are selected in accordance with the intended objectives and the prevailing circumstances.

The formulations, that is to say the compositions, preparations or mixtures comprising the compound (active ingredient) of formula I, or at least one compound of formula I and generally one or more solid or liquid formulation adjuvants, are prepared in known manner, e.g. by homogeneously mixing and/or grinding the active ingredients with formulation adjuvants, for example with solvents or solid carriers. It is also possible additionally to use surface-active compounds (surfactants) in the preparation of the formulations. Examples of solvents and solid carriers are given, for example, on page 6 of WO 97/34485.

Depending on the nature of the compound of formula I to be formulated, suitable surface-active compounds are non-ionic, cationic and/or anionic surfactants and surfactant mixtures having good dispersing and wetting properties.

Examples of suitable anionic, non-ionic and cationic surfactants are listed, for example, on pages 7 and 8 of WO 97/34485.

In addition, the surfactants conventionally employed in formulation technology, which are described, *inter alia,* in "McCutcheon's Detergents and Emulsifiers Annual" MC Publishing Corp., Ridgewood New Jersey, 1981, Stache, H., "Tensid-Taschenbuch", Carl Hanser Verlag, Munich/Vienna 1981, and M. and J. Ash, "Encyclopedia of Surfactants", Vol. I-III, Chemical Publishing Co., New York, 1980-81, are also suitable for the preparation of the herbicidal compositions according to the invention.

The herbicidal formulations generally contain from 0.1 to 99 % by weight, especially from 0.1 to 95 % by weight, herbicide, from 1 to 99.9 % by weight, especially from 5 to 99.8 % by weight, solid or liquid formulation adjuvants, and from 0 to 25 % by weight, especially from 0.1 to 25 % by weight, surfactants. Whereas commercial products will preferably be formulated as concentrates, the end user will normally employ dilute formulations. The compositions may also comprise further ingredients, such as stabilisers, for example vegetable oils or epoxidised vegetable oils (epoxidised coconut oil, rape oil or soybean oil), antifoams, for example silicone oil, preservatives, viscosity regulators, binders, tackifiers, and also fertilisers or other active ingredients.

The compounds of formula I are generally used on plants or the locus thereof at rates of application of from 0.001 to 0.5 kg/ha, especially from 0.005 to 0.25 kg/ha. The concentration required to achieve the desired effect can be determined by experiment. It is dependent on the nature of the action, the stage of development of the cultivated plant and of the weed and on the application (place, time, method) and may vary within wide limits as a function of those parameters.

The compounds of formula I are distinguished by herbicidal and growth-inhibiting properties, enabling them to be used in crops of herbicide-resistant useful plants, especially crops of maize, rice and soybeans. The term "crops" is to be understood as including crops that have been rendered tolerant to herbicides or classes of herbicides as a result of conventional methods of breeding or genetic techniques.

Varieties of useful plants that are especially suitable for the use according to the invention are those which are resistant to the inhibition of acetolactate synthase (ALS). Tissue culture techniques and genetic methods for the production of herbicide-resistant plants are described, for example, in EP-A-0 154 204.
It has long been known that resistance to sulfonylurea and imidazolinone herbicides in some enterobacteria and in yeast is based on one or more mutations in the gene that encodes acetolactate synthase (ALS) or acetohydroxy acid synthase (AHAS) and results in a corresponding modification in the AHAS enzyme. For example, U.S. Patent 4 761 373 describes maize plants that are obtained by selection of plant cell cultures and that are resistant to herbicide concentrations that normally inhibit the growth of maize plants. That resistance is based on a modification in the AHAS enzyme protein. EP-A 257 993 describes the nucleotide sequences of several AHAS-encoding genes as well as a total of 7 derived sequences that have a modification in the nucleotide sequence and accordingly also in the corresponding amino acid sequence, which results in resistance to customarily used amounts of sulfonylurea herbicides. That Application also discloses processes that enable those modified AHAS genes to be inserted into plants with the aid of genetic engineering procedures.

It is known that the AHAS enzyme is generally present in higher plants and also in microorganisms, for example the yeast Saccharomyces cerevisiae or in enterobacteria, e.g. E. coli and Salmonella typhimurium. In tobacco plants, the AHAS function is encoded by two genes that are not coupled, namely SuRA and SuRB. Those genes are substantially identical at both the nucleotide and the amino acid level (Lee et al., EMBO J. 7: 1241-1248, 1988). Arabidopsis, however, has only a single AHAS gene which likewise has been sequenced completely. (Mazur et al., Plant Physiol. 85: 1110-1117, 1987). A comparison of the nucleotide sequences of AHAS genes in higher plants shows that those regions exhibit a high degree of conservation. At least 10 such highly-conserved regions can be identified.

U.S. Pat. No. 5 013 659 describes herbicide-resistant mutants that have a modification in at least one amino acid within one or more of those conserved regions. In particular, within those regions there are very specific amino acids, the replacement of which by alternative amino acids is tolerated, ultimately resulting in plants that have increased tolerance to herbicides without at the same time losing their catalytic activity. The mutations described therein either encode a cross-resistance for imidazolinones and sulfonylureas or have a specific tolerance towards sulfonylureas.

The mutagenesis can take place either at the cell/tissue stage or using seeds (see, for example, EP-A 0 965 265). In this connection preference is given to the use of conventional procedures, as are customary within the scope of a chemical mutagenesis. Such a process is described, for example, in Kueh and Bright (Kueh, J.S.H. and Bright, S.W.J., Planta, 153, 166-171 (1981). Other chemical mutagenesis processes use N-methyl-N-nitrosourea and N-ethyl-N-nitrosourea (Fluhr, R. and Cseplo, A., Methods Enzymol. (Plant Mol. Biol.), 118, 611-623 (1986)), ethyl methanesulfonate (Sebastian, S.A., *et al*., Crop Sci., 29, 1403-1408 (1989)), and hydroxylamine or hydrazine (Khamankar, Y. G., J. Maharashtra Agric. Univ., 14, 322-325 (1989)) as mutagen.

Methods of screening and selecting mutants having herbicide resistance based on AHAS inhibition that employ cell culture techniques are described e.g. in in US-A-5 718 079. An alternative method lies in the mutagenesis of seeds that in a first screening step are incubated in a solution that contains an AHAS inhibitor. In a second step, the seeds are sown in soil and sprayed with the same AHAS inhibitor. Those plants which develop normally and have a normal phenotype are regarded as being resistant to the class of AHAS inihibitors used in each case.

The weeds to be controlled may be both monocotyledenous and dicotyledonous weeds, e.g. Stellaria, Nasturtium, Agrostis, Digitaria, Avena, Setaria, Sinapis, Lolium, Solanum, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola and Veronica.

The compound of formula I can advantageously be mixed with a number of other known herbicides, thereby obtaining, for example, a considerable broadening of the weed spectrum and in many cases also an increase in selectivity in respect of the useful plants. The present invention relates also to such mixtures. In particular, the following mixtures of the compound of formula I are important:
compound of formula I + acetochlor
compound of formula I + acifluorfen
compound of formula I + aclonifen
compound of formula I + alachlor
compound of formula I + amicarbazone
compound of formula I + atrazine
compound of formula I + azafenidin
compound of formula I + azimsulfuron
compound of formula I + BAY FOE 5043
compound of formula I + benazolin
compound of formula I + bensulfuron
compound of formula I + bentazone
compound of formula I + bispyribac-sodium
compound of formula I + bromoxynil
compound of formula I + butachlor
compound of formula I + butylate
compound of formula I + carbetamide
compound of formula I + chlorimuron-ethyl
compound of formula I + cinidon-ethyl
compound of formula I + cinosulfuron
compound of formula I + clethodim
compound of formula I + clefoxydim
compound of formula I + clodinafop
compound of formula I + clomazone
compound of formula I + clopyralid
compound of formula I + cloransulam
compound of formula I + cyhalofop
compound of formula I + cycloxydim
compound of formula I + 2,4-D
compound of formula I + 2,4-DB
compound of formula I + dicamba
compound of formula I + diclofop
compound of formula I + diclosulam
compound of formula I + difenzoquat metilsulfate
compound of formula I + dimethenamid
compound of formula I + S-dimethenamid
compound of formula I + dinitramine
compound of formula I + diuron
compound of formula I + EPTC
compound of formula I + ethephon
compound of formula I + ethoxysulfuron
compound of formula I + fenclorim
compound of formula I + fentrazamid
compound of formula I + flamprop
compound of formula I + fluzasulfuron
compound of formula I + fluazifop
compound of formula I + flufenazet
compound of formula I + flumetralin
compound of formula I + flumetsutam
compound of formula I + fluoxaprop
compound of formula I + flupyrsulfuron
compound of formula I + fluroxypyr
compound of formula I + fluthiacet-methyl
compound of formula I + fluxofenim
compound of formula I + fomesafen
compound of formula I + foramsulfuron
compound of formula I + glufosinate
compound of formula I + glyphosate
compound of formula I + halosuffuron
compound of formula I + haloxyfop
compound of formula I + imazamethabenz
compound of formula I + imazapyr
compound of formula I + imazaquin
compound of formula I + imazethapyr
compound of formula I + imazosulfuron
compound of formula I + imazamox
compound of formula I + iodosulfuron
compound of formula I + ioxynil
compound of formula I + isoxaflutole
compound of formula I + karbutilate
compound of formula I + lactofen
compound of formula I + lenacil
compound of formula I + linuron
compound of formula I + MCPP
compound of formula I + methabenzthiazuron
compound of formula I + methazole
compound of formula I + metobromuron
compound of formula I + metolachlor
compound of formula I + S-metolachlor
compound of formula I + metosulam
compound of formula I + metribuzin
compound of formula I + metsulfuron-methyl
compound of formula I + molinate
compound of formula I + MCPA
compound of formula I + NDA-402989
compound of formula I + nicosulfuron
compound of formula I + norflurazon
compound of formula I + oryzalin
compound of formula I + oxadiazon
compound of formula I + oxasulfuron
compound of formula I + oxacyclomefon
compound of formula I + oxyfluorfen
compound of formula I + pendimethalin
compound of formula I + phenmedipham
compound of formula I + fenoxaprop-P-ethyl (R)
compound of formula I + pretilachlor
compound of formula I + primisulfuron
compound of formula I + procarbazone-sodium
compound of formula I + prometryn
compound of formula I + propanil
compound of formula I + propaquizafop
compound of formula I + prosulfuron
compound of formula I + pyrazogyl
compound of formula I + pyrazolynate
compound of formula I + pyrazosulfuron-ethyl
compound of formula I + pyridate
compound of formula I + pyriminobac-methyl
compound of formula I + pyrithiobac-sodium
compound of formula I + quinclorac
compound of formula I + quizalofop
compound of formula I + rimsulfuron
compound of formula I + sequestrene
compound of formula I + sethoxydim
compound of formula I + simazine
compound of formula I + sulcotrione
compound of formula I + sulfentrazone
compound of formula I + sulfosate
compound of formula I + sulfosulfuron-methyl
compound of formula I + tepraloxydim
compound of formula I + terbuthylazine
compound of formula I + terbutryn
compound of formula I + thiazafluron
compound of formula I + thiazopyr
compound of formula I + thifensulfuron-methyl
compound of formula I + thiobencarb
compound of formula I + tralkoxydim
compound of formula I + triallate
compound of formula I + triasulfuron
compound of formula I + trifluralin
compound of formula I + tritosulfuron
compound of formula I + tribenuron-methyl
compound of formula I + trictopyr
compound of formula I + triflusulfuron
compound of formula I + trinexapac-ethyl

The mixing partners of the compound of formula I may also be in the form of esters or salts, such as those mentioned e.g. in The Pesticide Manual, Eleventh Edition, 1997, BCPC.

It has been shown, surprisingly, that certain safeners known from US-A-5 041 157, US-A-5 541 148, US-A-5 006 656, EP-A-0 094 349, EP-A-0 551 650, EP-A-0 268 554, EP-A-0 375 061, EP-A-0 174 562, EP-A-492 366, WO 91/7874, WO 94/987, DE-A-19612943, WO 96/29870, WO 98/13361, WO 98/39297, WO 98/27049, EP-A-0 716 073, EP-A-0 613 618, US-A-5 597 776 and EP-A-0 430 004 are suitable for mixing with the compound of formula I. The present invention therefore relates also to a selectively herbicidal composition for controlling grasses and weeds in crops of useful plants, especially in herbicide-tolerant crops of maize, soybeans and rice, which comprises a herbicide of formula I and a safener (counter-agent, antidote) and which protects the useful plants but not the weeds against the phytotoxic action of the herbicide, and to the use of that composition in controlling weeds in herbicide-tolerant crops of useful plants.

According to the invention there is therefore proposed a selectively herbicidal composition for use in herbicide-tolerant crops of useful plants which, in addition to comprising customary inert formulation adjuvants, such as carriers, solvents and wetting agents, comprises as active ingredient a mixture of
a) a herbicidally effective amount of a compound of formula I 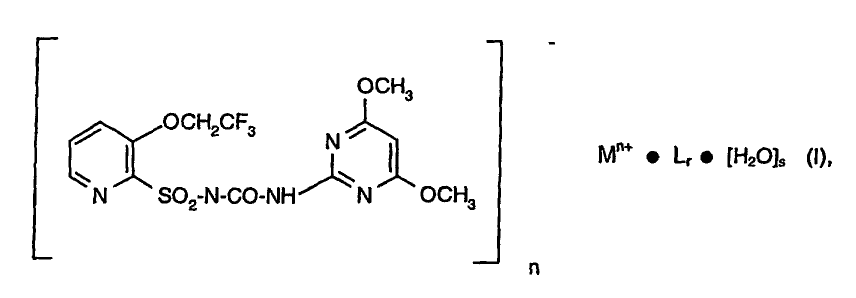 wherein the substituents are as defined above, and
b) a herbicidally-antagonistically effective amount either of a compound of formula S-I 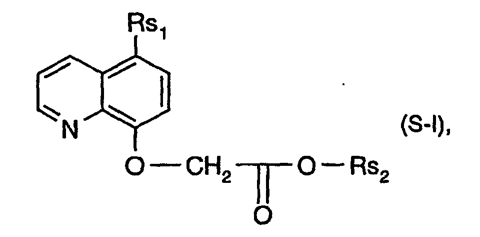
wherein
Rs₁ is hydrogen or chlorine and
Rs₂ is hydrogen, C₁-C₈alkyl, or C₁-C₈alkyl substituted by C₁-C₆alkoxy or by C₃-C₆alkenyloxy; or of a compound of formula S-II 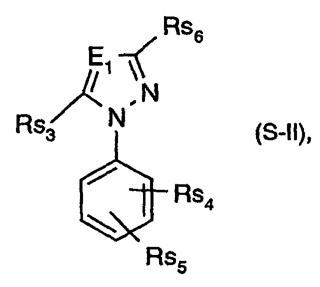 wherein
E₁ is nitrogen or methine;
Rs₃ is -CCl₃, phenyl or halo-substituted phenyl;
Rs₄ and Rs₅ are each independently of the other hydrogen or halogen; and
Rs₆ is C₁-C₄alkyl;
or of a compound of formula S-III 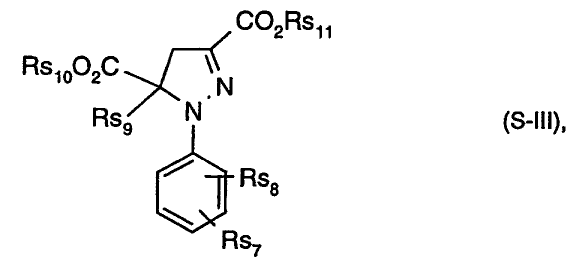 wherein
Rs₇ and Rs₈ are each independently of the other hydrogen or halogen and
Rs₉, Rs₁₀ and Rs₁₁ are each independently of the others C₁-C₄alkyl;
or of a compound of formula S-IV 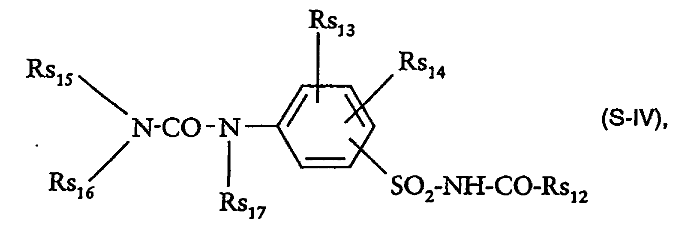 wherein
Rs₁₂ is a group 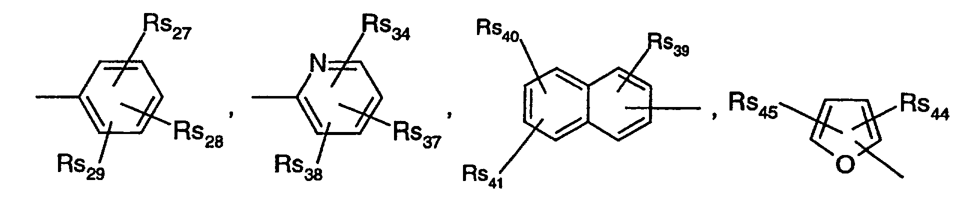 or 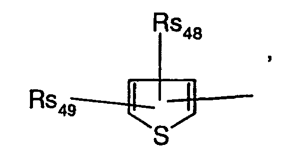 Rs₁₃ is hydrogen, halogen, cyano, trifluoromethyl, nitro, C₁-C₄alkyl, C₁-C₄alkoxy, C₁-C₄alkylthio, C₁-C₄alkylsulfinyl, C₁-C₄alkylsulfonyl, -COOH, -COO-C₁-C₄alkyl, -CONRs₁₈Rs₁₉, - C(O)-C₁-C₄alkyl, C(O)-phenyl, or phenyl substituted by halogen, C₁-C₄alkyl, methoxy, nitro or by trifluoromethyl, or -SO₂NRs₂₀Rs₂₁ or -OSO₂-C₁-C₄alkyl;
Rs₁₈, Rs₁₉, Rs₂₀ and Rs₂₁ are each independently of the others hydrogen or C₁-C₄alkyl, or Rs₁₈ and Rs₁₉ or Rs₂₀ and Rs₂₁ together form a C₄-C₆alkylene bridge, which may be interrupted by oxygen, NH or by -N(C₁-C₄alkyl)-;
Rs₁₄ is hydrogen, halogen, C₁-C₄alkyl, trifluoromethyl, C₁-C₆alkoxy, C₁-C₆alkylthio, -COOH or - COO-C₁-C₄alkyl;
or Rs₁₃ and Rs₁₄ together form a C₃-C₄alkylene bridge, which may be substituted by halogen or by C₁-C₄alkyl, or Rs₁₃ and Rs₁₄ together form a C₃-C₄alkenylene bridge, which may be substituted by halogen or by C₁-C₄alkyl, or Rs₁₃ and Rs₁₄ together form a C₄alkadienylene bridge, which may be substituted by halogen or by C₁-C₄alkyl;
Rs₁₅ and Rs₁₆ are each independently of the other hydrogen, C₁-C₈alkyl, C₃-C₈cycloalkyl, C₃-C₆alkenyl, C₃-C₆alkynyl, 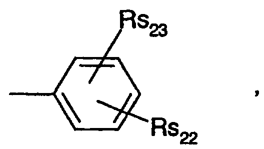 or C₁-C₄alkyl substituted by C₁-C₄alkoxy or by 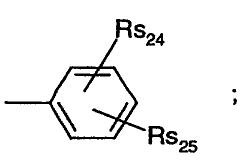 or Rs₁₅ and Rs₁₆ together form a C₄-C₆alkylene bridge, which may be interrupted by oxygen, sulfur, SO, SO₂, NH or by -N(C₁-C₄alkyl)-;
Rs₂₂, Rs₂₃, Rs₂₄ and Rs₂₅ are each independently of the others hydrogen, halogen, C₁-C₄alkyl, C₁-C₄alkoxy, C₁-C₄alkylthio, -COORs₂₆, trifluoromethyl, nitro or cyano, Rs₂₆ in each case being hydrogen, C₁-C₁₀alkyl, C₁-C₄alkoxy-C₁-C₄alkyl, C₁-C₄alkylthio-C₁-C₄alkyl, di-C₁-C₄alkylamino-C₁-C₄alkyl, halo-C₁-C₈alkyl, C₂-C₈alkenyl, halo-C₂-C₈alkenyl, C₃-C₈alkynyl, C₃-C₇cycloalkyl, halo-C₃-C₇cycloalkyl, C₁-C₈alkylcarbonyl, allylcarbonyl, C₃-C₇cycloalkylcarbonyl, benzoyl, which is unsubstituted or substituted on the phenyl ring by up to three identical or different substituents selected from halogen, C₁-C₄alkyl, halo-C₁-C₄alkyl, halo-C₁-C₄alkoxy and C₁-C₄alkoxy; or furyl or thienyl; or C₁-C₄alkyl substituted by phenyl, halophenyl, C₁-C₄alkylphenyl, C₁-C₄alkoxyphenyl, halo-C₁-C₄alkylphenyl, halo-C₁-C₄alkoxyphenyl, C₁-C₆alkoxycarbonyl, C₁-C₄alkoxy-C₁-C₈alkoxycarbonyl, C₃-C₈alkenyloxycarbonyl, C₃-C₈alkynyloxycarbonyl, C₁-C₈alkylthiocarbonyl, C₃-C₈alkenylthiocarbonyl, C₃-C₈alkynylthiocarbonyl, carbamoyl, mono-C₁-C₄alkylaminocarbonyl or by di-C₁-C₄alkylaminocarbonyl; or phenylaminocarbonyl, which may itself be substituted on the phenyl by up to three identical or different substituents selected from halogen, C₁-C₄alkyl, halo-C₁-C₄alkyl, halo-C₁-C₄-alkoxy and C₁-C₄alkoxy or by one substituent selected from cyano and nitro, or dioxolan-2-yl, which may itself be substituted by one or two C₁-C₄alkyl groups, or dioxan-2-yl, which may itself be substituted by one or two C₁-C₄alkyl groups, or C₁-C₄alkyl substituted by cyano, nitro, carboxyl or by C₁-C₈alkylthio-C₁-C₈alkoxycarbonyl;
Rs₁₇ is hydrogen or C₁-C₄alkyl;
Rs₂₇ is hydrogen, halogen, nitro, C₁-C₄alkyl or methoxy;
Rs₂₈ is hydrogen, halogen, C₁-C₄alkyl, trifluoromethyl, C₁-C₆alkoxy, C₁-C₆alkylthio, -COOH or -COO-C₁-C₄alkyl;
Rs₂₉ is hydrogen, halogen, cyano, nitro, C₁-C₄alkyl, C₁-C₄haloalkyl, C₁-C₄alkylthio, C₁-C₄-alkylsulfinyl, C₁-C₄alkylsulfonyl, -COOH, -COO-C₁-C₄alkyl, -CONRs₃₀Rs₃₁, C(O)-phenyl, or phenyl substituted by halogen, C₁-C₄alkyl, methoxy, nitro or by trifluoromethyl, or -SO₂NRs₃₂Rs₃₃, -OSO₂-C₁-C₄alkyl, C₁-C₆alkoxy, or C₁-C₆alkoxy substituted by C₁-C₄alkoxy or by halogen, or C₃-C₆alkenyloxy, or C₃-C₆alkenyloxy substituted by halogen, or C₃-C₆alkynyloxy; wherein Rs₃₀ and Rs₃₁ are each independently of the other hydrogen or C₁-C₄alkyl, or Rs₃₀ and Rs₃₁ together form a C₄-C₆alkylene bridge, which may be interrupted by oxygen, NH or by -N(C₁-C₄alkyl)-, and Rs₃₂ and Rs₃₃ are each independently of the other hydrogen or C₁-C₄alkyl, or Rs₃₂ and Rs₃₃ together form a C₄-C₆alkylene bridge, which may be interrupted by oxygen, NH or by -N(C₁-C₄alkyl)-;
Rs₃₄ is hydrogen, halogen, nitro, C₁-C₄alkyl, C₁-C₄alkoxy, C₁-C₄alkylthio, C₁-C₄alkylsulfinyl, C₁-C₄alkylsulfonyl, -COOH, -COO-C₁-C₄alkyl or CONRs₃₅Rs₃₆, wherein Rs₃₅ and Rs₃₆ are each independently of the other hydrogen or C₁-C₄alkyl, or Rs₃₅ and Rs₃₆ together form a C₄-C₆alkylene bridge, which may be interrupted by oxygen, NH or by -N(C₁-C₄alkyl)-;
Rs₃₇ is hydrogen, halogen, C₁-C₄alkyl, -COOH, -COO-C₁-C₄alkyl, trifluoromethyl or methoxy, or Rs₃₄ and Rs₃₇ together form a C₃-C₄alkylene bridge;
Rs₃₈ is hydrogen, halogen or C₁-C₄alkyl;
Rs₃₉ is hydrogen, halogen, C₁-C₄alkyl, -COOH, -COO-C₁-C₄alkyl, trifluoromethyl or methoxy; Rs₄₀ is hydrogen, halogen, nitro, C₁-C₄alkyl, C₁-C₄alkoxy, C₁-C₄alkylthio, C₁-C₄alkylsulfinyl, C₁-C₄alkylsulfonyl, -COOH, -COO-C₁-C₄alkyl or CONRs₄₂Rs₄₃;
Rs₄₁ is hydrogen, halogen or C₁-C₄alkyl; or Rs₄₀ and Rs₄₁ together form a C₃-C₄alkylene bridge;
Rs₄₂ and Rs₄₃ are each independently of the other hydrogen or C₁-C₄alkyl, or Rs₄₂ and Rs₄₃ together form a C₄-C₆alkylene bridge, which may be interrupted by oxygen, NH or by - N(C₁-C₄alkyl)- ;
Rs₄₄ is hydrogen, halogen, C₁-C₄alkyl, -COOH, -COO-C₁-C₄alkyl, trifluoromethyl or methoxy; Rs₄₅ is hydrogen, halogen, nitro, C₁-C₄alkyl, C₁-C₄alkoxy, C₁-C₄alkylthio, C₁-C₄alkylsulfinyl, C₁-C₄alkylsulfonyl, -COOH, -COO-C₁-C₄alkyl or CONRs₄₆Rs₄₇; Rs₄₆ and Rs₄₇ are each independently of the other hydrogen or C₁-C₄alkyl, or Rs₄₆ and Rs₄₇ together form a C₄-C₆alkylene bridge, which may be interrupted by oxygen, NH or by -N(C₁-C₄alkyl)- ;
Rs₄₈ is hydrogen, halogen, C₁-C₄alkyl, -COOH, -COO-C₁-C₄alkyl, trifluoromethyl or methoxy; Rs₄₉ is hydrogen, halogen, nitro, C₁-C₄alkyl, C₁-C₄alkoxy, C₁-C₄alkylthio, C₁-C₄alkylsulfinyl, C₁-C₄alkylsulfonyl, -COOH, -COO-C₁-C₄alkyl or CONRs₅₀Rs₅₁;
Rs₅₁ and Rs₅₂ are each independently of the other hydrogen or C₁-C₄alkyl, or Rs₅₁ and Rs₅₂ together form a C₄-C₆alkylene bridge, which may be interrupted by oxygen, NH or by -N(C₁-C₄alkyl)- ;
or of a compound of formula S-V 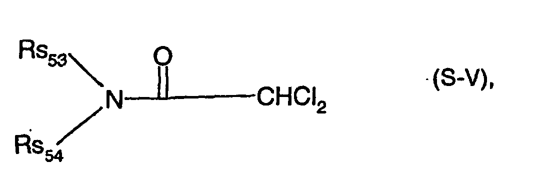 wherein Rs₅₃ and Rs₅₄ are each independently of the other C₁-C₆alkyl or C₂-C₆alkenyl; or Rs₅₃ and Rs₅₄ together are 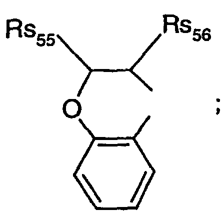 Rs₅₅ and Rs₅₆ are each independently of the other hydrogen or C₁-C₆alkyl; or Rs₅₃ and Rs₅₄ together are 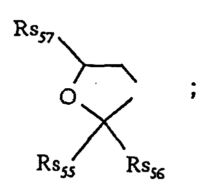 wherein
Rs₅₅ and Rs₅₆ are each independently of the other C₁-C₄alkyl, or Rs₅₅ and Rs₅₆ together are -(CH₂)₅-;
Rs₅₇ is hydrogen, C₁-C₄alkyl or 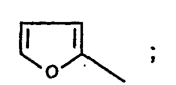 or Rs₅₃ and Rs₅₄ together are 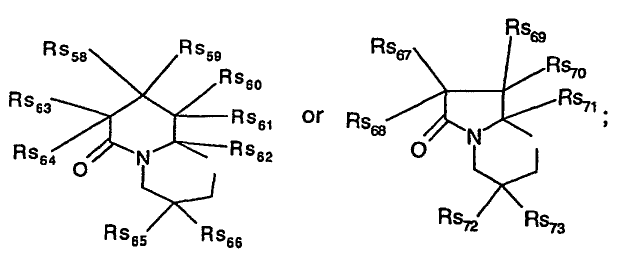 wherein
Rs₅₈, Rs₅₉, Rs₆₀, Rs₆₁, Rs₆₂, Rs₆₃, Rs₆₄, Rs₆₅, Rs₆₆, Rs₆₇, Rs₆₈, Rs₆₉, Rs₇₀, Rs₇₁, Rs₇₂ and Rs₇₃ are each independently of the others hydrogen or C₁-C₄alkyl;
or of a compound of formula S-VI 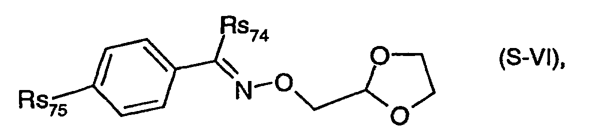 wherein Rs₇₅ is hydrogen or chlorine and Rs₇₄ is cyano or trifluoromethyl;
or of a compound of formula S-VII 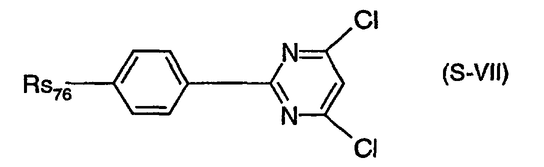 wherein Rs₇₆ is hydrogen or methyl;
or of formula S-VIII 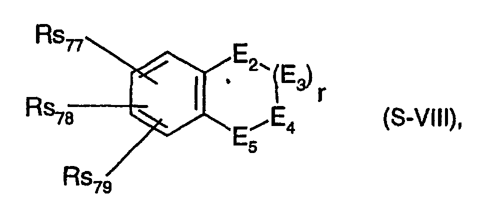 wherein
r is 0 or 1;
Rs₇₇ is hydrogen or C₁-C₄alkyl, which may be substituted by C₁-C₄alkoxy, C₁-C₄alkylthio, C₁-C₄alkylsulfinyl, C₁-C₄alkylsulfonyl, C₁-C₄haloalkyl, C₁-C₄haloalkoxy, C₁-C₄haloalkylthio, C₁-C₄haloalkylsulfinyl, C₁-C₄haloalkylsulfonyl, nitro, cyano, -COOH, COO-C₁-C₄alkyl, -NRs₈₀Rs₈₁, -SO₂NRs₈₂Rs₈₃ or by -CONRs₈₄Rs₈₅;
Rs₇₈ is hydrogen, halogen, C₁-C₄alkyl, trifluoromethyl, C₁-C₄alkoxy or C₁-C₄haloalkoxy;
Rs₇₉ is hydrogen, halogen or C₁-C₄alkyl;
Rs₈₀ is hydrogen, C₁-C₄alkyl or C₁-C₄alkylcarbonyl;
Rs₈₁ is hydrogen or C₁-C₄alkyl; or
Rs₈₀ and Rs₈₁ together form a C₄- or C₅-alkylene group;
Rs₈₂, Rs₈₃, Rs₈₄ and Rs₈₅ are each independently of the others hydrogen or C₁-C₄alkyl; or Rs₈₂ together with Rs₈₃ or Rs₈₄ together with Rs₈₅ are each independently of the others C₄- or C₅-alkylene, wherein one carbon atom may have been replaced by oxygen or by sulfur or one or two carbon atoms may have been replaced by -NH- or by -N(C₁-C₄alkyl)-;
E₂, E₃, E₄ and E₅ are each independently of the others oxygen, sulfur, C(Rs₈₆)Rs₈₇, carbonyl, -NH-, -N(C₁-C₈alkyl)-, a group 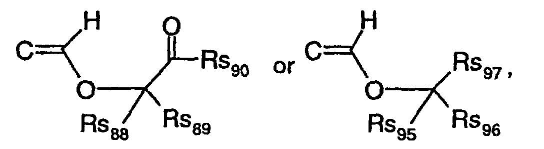 Rs₈₆ and Rs₈₇ are each independently of the other hydrogen or C₁-C₈alkyl; or
Rs₈₆ and Rs₈₇ together are C₂-C₆alkylene;
Rs₈₈ and Rs₈₉ are each independently of the other hydrogen or C₁-C₈alkyl; or
Rs₈₈ and Rs₈₉ together are a C₂-C₆alkylene group;
Rs₉₀ is Rs₉₁-O-, Rs₉₂-S- or -NRs₉₃Rs₉₄;
Rs₉₁ and Rs₉₂ are each independently of the other hydrogen, C₁-C₈alkyl, C₁-C₈haloalkyl, C₁-C₄alkoxy-C₁-C₈alkyl, C₃-C₆alkenyloxy-C₁-C₈alkyl or phenyl-C₁-C₈alkyl, wherein the phenyl ring may be substituted by halogen, C₁-C₄alkyl, trifluoromethyl, methoxy, methylthio, methylsulfinyl or by methylsulfonyl, or C₃-C₆alkenyl, C₃-C₆haloalkenyl, phenyl-C₃-C₆alkenyl, C₃-C₆-alkynyl, phenyl-C₃-C₆alkynyl, oxetanyl, furyl or tetrahydrofuryl;
Rs₉₃ is hydrogen, C₁-C₈alkyl, phenyl, phenyl-C₁-C₈alkyl, wherein the phenyl rings may be substituted by fluorine, chlorine, bromine, nitro, cyano, -OCH₃, C₁-C₄alkyl or by CH₃SO₂-, C₁-C₄alkoxy-C₁-C₈alkyl, C₃-C₆alkenyl or C₃-C₆alkynyl;
Rs₉₄ is hydrogen, C₁-C₈alkyl, C₃-C₆alkenyl or C₃-C₆alkynyl; or
Rs₉₃ and Rs₉₄ together are C₄- or C₅-alkylene, wherein one carbon atom may have been replaced by oxygen or by sulfur or one or two carbon atoms may have been replaced by -NH- or by -N(C₁-C₄alkyl)-;
Rs₉₅ and Rs₉₆ are each independently of the other hydrogen or C₁-C₈alkyl; or
Rs₉₅ and Rs₉₆ together form a C₂-C₆alkylene group; and
Rs₉₇ is C₂-C₄alkenyl or C₂-C₄alkynyl; with the provisos that
a) at least one of the ring members E₂, E₃, E₄ and E₅ is carbonyl, and a ring member adjacent to that group or those groups is the group 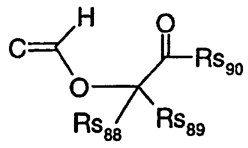 or 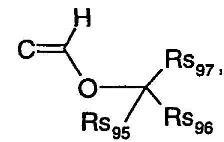 there being only one such group; and
b) two adjacent ring members E₂ and E₃, E₃ and E₄ and E₄ and E₅ may not simultaneously be oxygen;
or of a compound of formula S-IX 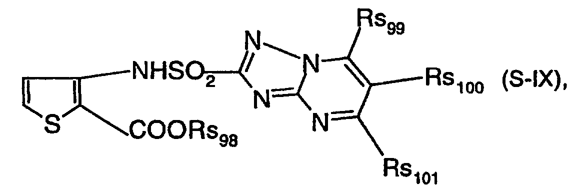 wherein Rs₉₈ is hydrogen, C₁-C₆alkyl, C₃-C₆cycloalkyl, C₃-C₆alkenyl or C₃-C₆alkynyl; and Rs₉₉, Rs₁₀₀ and Rs₁₀₁ are each independently of the others hydrogen, C₁-C₆alkyl, C₃-C₆cycloalkyl or C₁-C₆alkoxy, with the proviso that one of the substituents Rs₉₉, Rs₁₀₀ and Rs₁₀₁ is other than hydrogen;
or of a compound of formula S-X 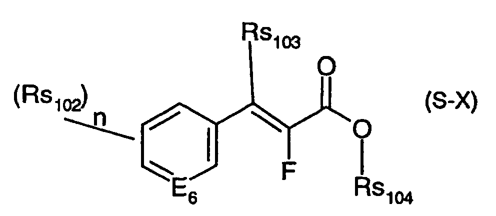 wherein E₆ is nitrogen or methine, n is 0, 1, 2 or 3 when E₆ is nitrogen and n is 0, 1, 2, 3 or 4 when E₆ is methine, Rs₁₀₂ is halogen, C₁-C₄alkyl, C₁-C₄haloalkyl, C₁-C₄alkoxy, C₁-C₄haloalkoxy, nitro, C₁-C₄alkylthio, C₁-C₄alkylsulfonyl, C₁-C₄alkoxycarbonyl, phenyl or phenoxy, or phenyl or phenoxy each substituted by C₁-C₃alkyl, C₁-C₃haloalkyl, C₁-C₃alkoxy, C₁-C₃haloalkoxy, halogen, cyano or by nitro;
Rs₁₀₃ is hydrogen or C₁-C₄alkyl;
Rs₁₀₄ is hydrogen, C₁-C₄alkyl, C₃-C₆cycloalkyl, C₂-C₆alkenyl, C₂-C₆alkynyl, C₁-C₄haloalkyl, C₂-C₆haloalkenyl, C₂-C₆haloalkynyl, C₁-C₄alkylthio-C₁-C₄alkyl, C₁-C₄alkylsulfonyl-C₁-C₄alkyl, C₁-C₄alkoxy-C₁-C₄alkyl, C₁-C₄alkenyloxy-C₁-C₄alkyl or C₁-C₄alkynyloxy-C₁-C₄alkyl;
or of a compound of formula S-XI 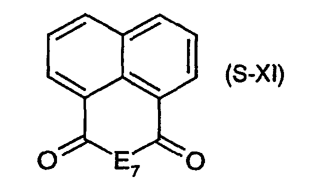 wherein E₇ is oxygen or N-Rs₁₀₅ and Rs₁₀₅ is a group of formula 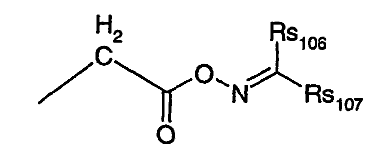 wherein Rs₁₀₆ and Rs₁₀₇ are each independently of the other cyano, hydrogen, C₁-C₄alkyl, C₃-C₆cycloalkyl, C₂-C₆alkenyl, aryl, phenyl or heteroaryl, or phenyl, aryl or heteroaryl each substituted by C₁-C₃alkyl, C₁-C₃haloalkyl, C₁-C₃alkoxy, C₁-C₃haloalkoxy, halogen, cyano or by nitro;
or of a compound of formula S-XII 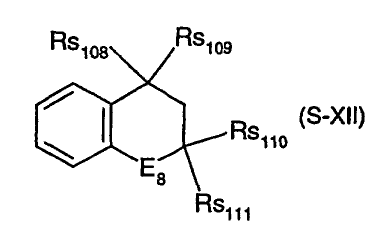 wherein E₈ is oxygen, sulfur, sulfinyl, sulfonyl or methine,
Rs₁₀₈ and Rs₁₀₉ are each independently of the other CH₂COORs₁₁₂ or COORs₁₁₃ or together are a group of formula -(CH₂)C(O)-O-C(O)-(CH₂)-, and Rs₁₁₂ and Rs₁₁₃ are each independently of the other hydrogen, C₁-C₄alkyl, C₂-C₄alkenyl, C₂-C₆alkynyl, C₃-C₆cycloalkyl, C₁-C₄-haloalkyl, a metal cation or an ammonium cation; and
Rs₁₁₀ and Rs₁₁₁ are each independently of the other hydrogen, halogen or C₁-C₄alkyl;
or of a compound of formula S-XIII 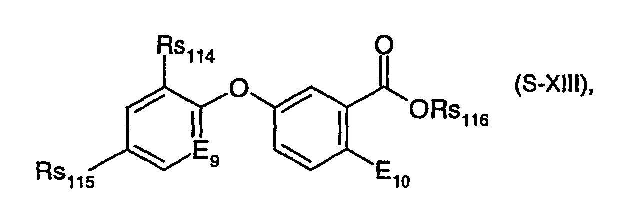 wherein Rs₁₁₄ and Rs₁₁₅ are each independently of the other hydrogen, halogen or C₁-C₄-haloalkyl, Rs₁₁₆ is hydrogen, C₁-C₄alkyl, C₃-C₄alkenyl, C₃-C₄alkynyl, C₁-C₄haloalkyl, C₃-C₆cycloalkyl, a metal cation or an ammonium cation;
E₉ is nitrogen, methine, C-F or C-CI and
E₁₀ is a group of formula 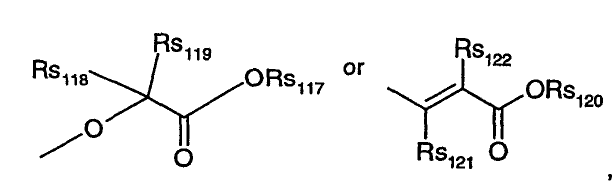 wherein Rs₁₁₈, Rs₁₁₉, Rs₁₂₁ and
Rs₁₂₂ are each independently of the others hydrogen or C₁-C₄alkyl;
Rs₁₁₇ and Rs₁₂₀ are each independently of the other hydrogen, C₁-C₄alkyl, C₃-C₄alkenyl, C₃-C₄alkynyl, C₁-C₄haloalkyl, C₃-C₆cycloalkyl, a metal cation or an ammonium cation;
or of a compound of formula S-XIV 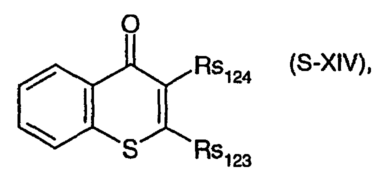 wherein Rs₁₂₃ is hydrogen, cyano, halogen, C₁-C₄alkyl, C₃-C₆cycloalkyl, C₁-C₄alkoxy, C₁-C₄alkoxycarbonyl, C₁-C₄alkylthiocarbonyl, -NH-Rs₁₂₅ -C(O)NH-Rs₁₂₆, aryl or heteroaryl, or aryl or heteroaryl each substituted by C₁-C₃alkyl, C₁-C₃haloalkyl, C₁-C₃alkoxy, C₁-C₃haloalkoxy, halogen, cyano or by nitro;
Rs₁₂₄ is hydrogen, cyano, nitro, halogen, C₁-C₄alkyl, C₁-C₄haloalkyl, C₁-C₄alkoxy, C₁-C₄thioalkyl; and
Rs₁₂₅ and Rs₁₂₆ are each independently of the other C₁-C₄alkyl, C₁-C₄haloalkyl, C₃-C₄alkenyl, C₃-C₄alkynyl, C₃-C₄cycloalkyl, C₁-C₄alkylcarbonyl, C₁-C₄alkylsulfonyl, aryl or heteroaryl, or aryl or heteroaryl each substituted by C₁-C₃alkyl, C₁-C₃haloalkyl, C₁-C₃alkoxy, C₁-C₃haloalkoxy, halogen, cyano or by nitro;
or of a compound of formula S-XV 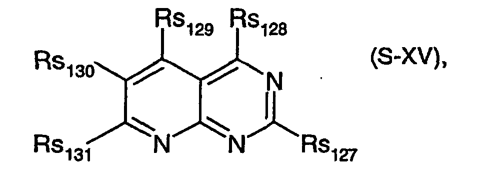 wherein Rs₁₂₇ and Rs₁₂₈ are each independently of the other hydrogen, C₁-C₄alkyl, C₁-C₄-haloalkyl, C₁-C₄alkoxy, mono-C₁-C₈- or di-C₁-C₈-alkylamino, C₃-C₆cycloalkyl, C₁-C₄thioalkyl, phenyl or heteroaryl;
Rs₁₂₉ is hydrogen, C₁-C₄alkyl, C₁-C₄haloalkyl, C₁-C₄alkoxy, mono-C₁-C₈- or di-C₁-C₈-alkylamino, C₃-C₆cycloalkyl, C₁-C₄thioalkyl, phenyl, heteroaryl, OH, NH₂, halogen, di-C₁-C₄aminoalkyl, C₁-C₄alkylthio, C₁-C₄alkylsulfonyl or C₁-C₄alkoxycarbonyl;
Rs₁₃₀ is hydrogen, C₁-C₄alkyl, C₁-C₄haloalkyl, C₁-C₄alkoxy, mono-C₁-C₈- or di-C₁-C₈alkylamino, C₃-C₆cycloalkyl, C₁-C₄thioalkyl, phenyl, heteroaryl, cyano, nitro, carboxyl, C₁-C₄-alkoxycarbonyl, di-C₁-C₄aminoalkyl, C₁-C₄alkylthio, C₁-C₄alkylsulfonyl, SO₂-OH, Di-C₁-C₄-aminoalkylsulfonyl or C₁-C₄alkoxysulfonyl;
Rs₁₃₁ is hydrogen, C₁-C₄alkyl, C₁-C₄haloalkyl, C₁-C₄alkoxy, mono-C₁-C₈- or di-C₁-C₈-alkylamino, C₃-C₆cycloalkyl, C₁-C₄thioalkyl, phenyl, heteroaryl, OH, NH₂, halogen, di-C₁-C₄-aminoalkyl, pyrrolidin-1-yl, piperidin-1-yl, morpholin-1-yl, C₁-C₄alkylthio, C₁-C₄alkylsulfonyl, C₁-C₄alkoxycarbonyl, phenoxy, naphthoxy, phenylamino, benzoyloxy or phenylsulfonyloxy;
or of a compound of formula S-XVI 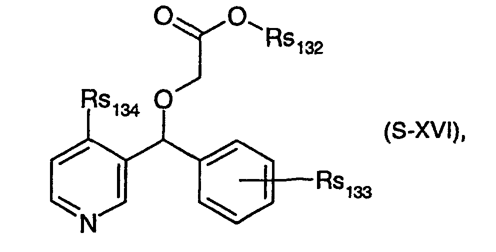 wherein Rs₁₃₂ is hydrogen, C₄alkyl, C₁-C₄haloalkyl, C₂-C₄alkenyl, C₂-C₄alkynyl or C₁-C₄alkoxy-C₁-C₄alkyl;
Rs₁₃₃ is hydrogen, halogen, C₁-C₄alkyl, C₁-C₄haloalkyl or C₁-C₄alkoxy and Rs₁₃₄ is hydrogen, halogen, C₁-C₄alkyl, C₁-C₄haloalkyl or C₁-C₄alkoxy; with the proviso that Rs₁₃₃ and Rs₁₃₄ are not simultaneously hydrogen.

Safeners that'are very especially preferred for the composition according to the invention are selected from the group of compounds
of formula S1.1 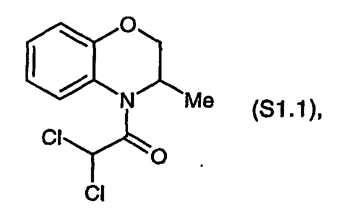 and the compound of formula S1.2 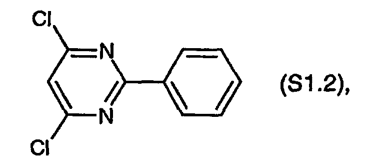 and the compound of formula S1.3 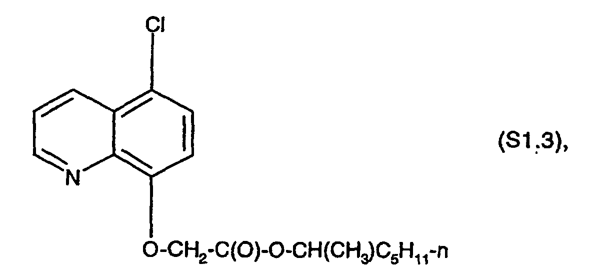 and the compound of formula S1.4 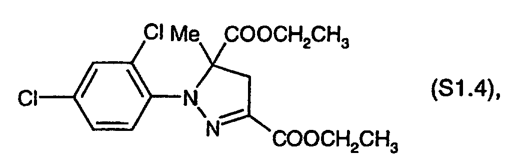 and the compound of formula S1.5 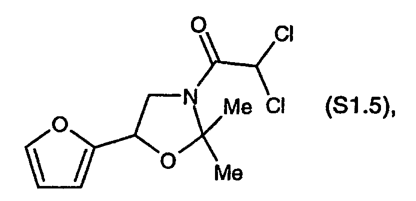 and the compound of formula S1.6 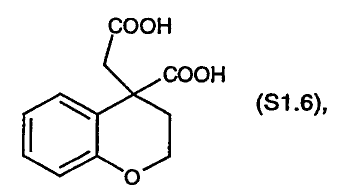 and the compound of formula S1.7 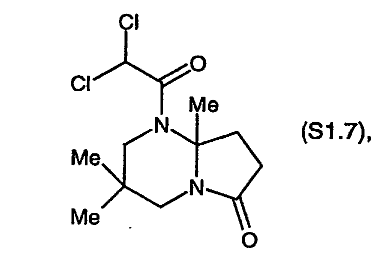 and the compound of formula S1.8 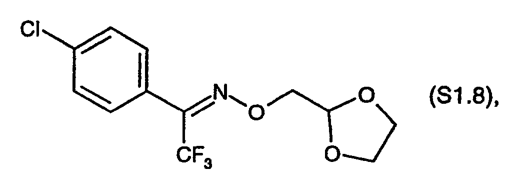 and of formula S1.9

Cl₂CHCON(CH₂CH=CH₂) (S1.9),

and of formula S1.10 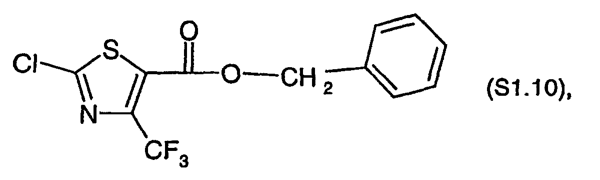 and of formula S1.11 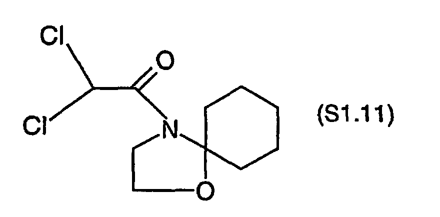 and of formula S1.12 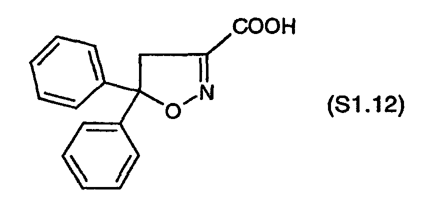 and of formula S1.13

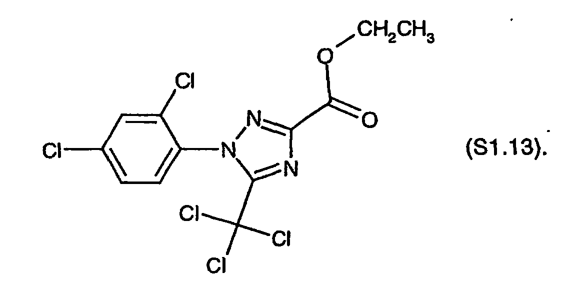

The compounds of formulae S1.1 to S1.13 are known and are described, for example, in the Pesticide Manual, eleventh ed., British Crop Protection Council, 1997 under entry numbers 61 (formula S1.1, benoxacor), 304 (formula S1.2, fenclorim), 154 (formula S1.3, cloquintocet), 462 (formula S1.4, mefenpyr-diethyl), 377 (formula 51.5, furilazole), 363 (formula S1.8, fluxofenim), 213 (formula S1.9, dichlormid) and 350 (formula S1.10, flurazole). The compound of formula S1.11 is known as MON 4660 (Monsanto) and is described, for example, EP-A-0 436 483.

The compound of formula S1.6 (AC 304415) is described, for example, in EP-A-0 613 618, and the compound of formula S1.7 in DE-A-2948535. The compound of formula S1.12 is described in DE-A-4331448, and the compound of formula S1.13 in DE-A-3525205.

The following Examples illustrate the invention further but do not limit the invention.

### Formulation Examples:

| F1. Coated granules | a) | b) | c) |
|---|---|---|---|
| compound of formula I | 0.1 % | 5 % | 15 % |
| polyethylene glycol MW 200 | 1.0 % | 2 % | 3 % |
| highly dispersed silicic acid | 0.9 % | 1 % | 2 % |
| inorganic carrier material | 98.0 % | 92 % | 80 % |
| (diameter 0.1 - 1 mm) | | | |
| e.g. CaCO₃ or SiO₂ | | | |

The finely ground active ingredient is uniformly applied, in a mixer, to the carrier moistened with polyethylene glycol. Non-dusty coated granules are obtained in this manner.

| F2. Extruder granules | a) | b) | c) | d) |
|---|---|---|---|---|
| | | | | |
| compound of formula I | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants, and the mixture is moistened with water. The mixture is extruded and then dried in a stream of air.

| F3. Dusts | a) | b) | c) |
|---|---|---|---|
| compound of formula I | 0.1 % | 1 % | 5 % |
| talcum | 39.9 % | 49 % | 35 % |
| kaolin | 60.0 % | 50 % | 60 % |

Ready-for-use dusts are obtained by mixing the active ingredient with the carriers, and grinding the mixture in a suitable mill.

### Example F4: Preparation of wettable granules of the compound of formula I:

The following substances are mixed together and then ground using a commercially available mill:
75 % crystal modification A of compound of formula I
4 % dibutylnaphthalenesulfonic acid sodium salt
8 % sodium lignosulfonate
0.5 % silicone antifoam
ad 100 % silicon oxide.

22-26 % by weight water are then added to the mixture and granulation is carried out. After drying to a residual moisture content of < 4.5 % on a commercially available continuous dryer, the resulting granules are sieved (vibrating/tumbling screen) to a particle size of from 0.4 to 1.6 mm, yielding granules that comprise the compound of formula I in the form of crystal modification C.

### Example F5: Preparation of wettable granules of the compound of formula I:

The following substances are mixed together and then ground using a commercially available mill:
75 % crystal modification B of the compound of formula I
4 % dibutylnaphthalenesulfonic acid sodium salt
8 % sodium lignosulfonate
0.5 % silicone antifoam
ad 100 % silicon oxide.

18-20 % by weight water are then added to the mixture and granulation is carried out. After drying to a residual moisture content of < 4.5 % on a commercially available continuous dryer, the resulting granules are sieved (vibrating/tumbling screen) to a particle size of from 0.4 to 1.6 mm, yielding granules that comprise the compound of formula I in the form of crystal modification B.

### Example F6: Preparation of wettable granules of the compound of formula I:

The following substances are mixed together and then ground using a commercially available mill:
75 % crystal modification K of the compound of formula I
4 % dibutylnaphthalenesulfonic acid sodium salt
8 % sodium lignosulfonate
0.5 % silicone antifoam
ad 100 % silicon oxide.

43-48 % by weight water are then added to the mixture and granulation is carried out. After drying to a residual moisture content of < 4.5 % on a commercially available continuous dryer, the resulting granules are sieved (vibrating/tumbling screen) to a particle size of from 0.4 to 1.6 mm, yielding granules that comprise the compound of formula I in the form of a mixture of crystal modification B and crystal modification C.

The X-ray powder pattern gives the d-values (interplanar spacing), the associated intensities of the X-ray reflections and the diffraction angles 2 theta (apparatus-specific) of the crystal modification in question.

The measurement of the X-ray powder pattems is carried out with a Guinier camera FR 552 from Enraf-Nonius using CuKalpha1 radiation. The patterns registered on X-ray film are evaluated with a Line-Scanner LS-18 from Johansson using Scanpi-Software.

### Preparation Examples:

### Example P1: Preparation of the compound of formula I wherein M is sodium, n is 1, L is tetrahydrofuran, r is 1/2 and s is 0 (J modification):

A solution of 40 g of 4,6-dimethoxy-pyrimidine-2-isocyanate in 300 g of tetrahydrofuran (anhydrous) is added at a temperature of 40-45°C to a suspension of 59 g of 3-(2-triffuoroethoxy)-pyridinylsulfonamide sodium salt in 210 g of anhydrous tetrahydrofuran. The reaction mixture is then stirred at a temperature of 40°C until the conversion is complete. Finally the J modification is obtained by filtering and washing with anhydrous tetrahydrofuran.

**Table R1:**

| X-ray powder pattern of modification J: | | |
|---|---|---|
| 2θ [degrees] | d[Å] | Intensity |
| 5.6 | 15.7 | weak |
| 8.6 | 10.2 | very strong |
| 10.7 | 8.2 | weak |
| 11.3 | 7.8 | weak |
| 12.1 | 7.3 | weak |
| 13.1 | 6.7 | weak |
| 13.6 | 6.5 | very weak |
| 14.4 | 6.2 | medium |
| 15.7 | 5.64 | very weak |
| 16.0 | 5.53 | weak |
| 16.3 | 5.42 | weak |
| 17.4 | 5.09 | weak |
| 17.9 | 4.96 | medium |
| 18.2 | 4.86 | very weak |
| 19.3 | 4.60 | medium |
| 20.3 | 4.37 | medium |
| 21.0 | 4.24 | weak |
| 21.6 | 4.11 | very strong |
| 22.5 | 3.95 | very weak |
| 22.8 | 3.90 | weak |
| 23.3 | 3.81 | very weak |
| 24.0 | 3.71 | medium |
| 24.5 | 3.62 | weak |
| 25.3 | 3.52 | very weak |
| 26.0 | 3.43 | strong |
| 26.4 | 3.37 | weak |
| 26.8 | 3.32 | very weak |
| 27.3 | 3.27 | weak |
| 30.4 | 2.94 | very weak |
| 31.7 | 2.82 | medium |

### Example P2: Preparation of the compound of formula I wherein M is sodium, n is 1, r is 0 and s is 0 (K modification):

Drying the J modification from Example P1 at a temperature of 60°C and a pressure of 4 kPa yields the K modification. That crystalline form is water- and solvent-free: thermogravimetric measurement shows a weight loss of less than 0.1 % by weight up to a temperature of 175°C.

**Table R2:**

| X-ray powder pattern of modification K: | | |
|---|---|---|
| 2θ [degrees] | d[Å] | Intensity |
| 6.6 | 13.4 | weak |
| 8.8 | 10.1 | very weak |
| 9.5 | 9.3 | very strong |
| 11.4 | 7.8 | weak |
| 12.9 | 6.9 | very weak |
| 13.3 | 6.7 | very weak |
| 15.7 | 5.63 | very weak |
| 16.6 | 5.35 | medium |
| 19.0 | 4.66 | weak |
| 20.0 | 4.44 | very weak |
| 20.4 | 4.35 | weak |
| 21.5 | 4.12 | strong |
| 22.6 | 3.94 | strong |
| 22.9 | 3.87 | very weak |
| 23.7 | 3.76 | weak |
| 24.6 | 3.61 | medium |
| 25.5 | 3.49 | very weak |
| 26.2 | 3.40 | very weak |

### Example P3: Preparation of the compound of formula I wherein M is sodium, n is 1, L is tetrahydrofuran, r is 1 and s is 1 (I modification):

A solution of 19.9 g of 4,6-dimethoxy-pyrimidine-2-isocyanate in 350 g of tetrahydrofuran (anhydrous) is added at a temperature of 25°C to a suspension von 34.2 g of 3-(2-trifluoroethoxy)-pyridinylsulfonamide sodium salt in 200 ml of anhydrous tetrahydrofuran. The reaction mixture is stirred at a temperature of 25°C until the conversion is complete. Then 10 g of water are added and the mixture is stirred for 18 hours. Finally the I modification is obtained by filtering and washing with anhydrous tetrahydrofuran.

**Table R3:**

| X-ray powder pattern of modification I: | | |
|---|---|---|
| 2θ [degrees] | d[Å] | Intensity |
| 7.6 | 11.6 | weak |
| 9.0 | 9.8 | very weak |
| 11.0 | 8.0 | very strong |
| 11.6 | 7.6 | medium |
| 13.3 | 6.7 | strong |
| 13.7 | 6.4 | very weak |
| 14.0 | 6.3 | weak |
| 14.4 | 6.1 | very weak |
| 15.3 | 5.80 | medium |
| 15.6 | 5.66 | very weak |
| 16.2 | 5.47 | strong |
| 17.3 | 5.12 | very weak |
| 17.4 | 5.08 | very weak |
| 18.3 | 4.84 | weak |
| 18.6 | 4.76 | weak |
| 19.8 | 4.47 | strong . |
| 20.1 | 4.40 | weak |
| 21.1 | 4.21 | medium |
| 21.2 | 4.19 | medium |
| 21.4 | 4.15 | very weak |
| 22.2 | 4.00 | very weak |
| 22.6 | 3.93 | very weak |
| 23.2 | 3.84 | medium |
| 23.9 | 3.72 | very strong |
| 24.8 | 3.58 | medium |
| 25.3 | 3.52 | medium |
| 26.9 | 3.32 | very weak |
| 27.2 | 3.28 | very weak |
| 27.5 | 3.25 | very weak |
| 28.7 | 3.11 | very weak |
| 29.0 | 3.07 | very weak |
| 30.2 | 2.95 | very weak |
| 31.2 | 2.86 | weak |
| 31.7 | 2.82 | very weak |
| 32.6 | 2.75 | very weak |
| 34.9 | 2.57 | weak |
| 36.0 | 2.49 | very weak |

### Example P4: Preparation of the compound of formula I wherein M is sodium, n is 1, r is 0 and s is 1 (B modification):

The B modification is obtained selectively when 100 g of the K modification prepared according to Example P2 is suspended in 230 g of water for 15 minutes, then preferably inoculated with 1-3 g of seed crystals of the B modification and the suspension is stirred at a temperature of 20-25°C until transformation is complete. The suspension is then filtered. and the filtration residue is dried to constant weight at a temperature of 60°C and a pressure of 4 kPa.

**Table R4:**

| X-ray powder pattern of modification B: | | |
|---|---|---|
| 2θ [degrees] | d[Å] | Intensity |
| 8.9 | 10.0 | medium |
| 9.6 | 9.2 | strong |
| 10.3 | 8.6 | very weak |
| 11.0 | 8.1 | weak |
| 12.2 | 7.2 | strong |
| 12.9 | 6.9 | strong |
| 13.8 | 6.4 | medium |
| 15.2 | 5.82 | strong |
| 15.4 | 5.75 | strong |
| 15.7 | 5.64 | very strong |
| 16.0 | 5.53 | very weak |
| 17.3 | 5.13 | medium |
| 17.8 | 4.97 | very strong |
| 19.1 | 4.65 | medium |
| 20.6 | 4.30 | very strong |
| 21.0 | 4.22 | weak |
| 21.4 | 4.15 | very weak |
| 22.1 | 4.02 | weak |
| 22.5 | 3.94 | weak |
| 23.4 | 3.79 | medium |
| 23.8 | 3.73 | weak |
| 24.2 | 3.68 | medium |
| 24.6 | 3.61 | weak |
| 24.8 | 3.58 | weak |
| 25.3 | 3.52 | very strong |
| 26.0 | 3.42 | very weak |
| 26.4 | 3.37 | weak |
| 26.9 | 3.31 | very weak |
| 27.3 | 3.27 | very weak |
| 27.6 | 3.23 | weak |
| 28.0 | 3.18 | medium |
| 28.9 | 3.08 | very weak |
| 29.4 | 3.03 | very weak |
| 30.3 | 2.95 | very weak |
| 31.2 | 2.87 | strong |
| 31.7 | 2.82 | very weak |
| 32.1 | 2.79 | very weak |
| 32.7 | 2.73 | very weak |
| 33.4 | 2.68 | very weak |
| 33.8 | 2.65 | very weak |
| 34.0 | 2.63 | very weak |
| 34.5 | 2.60 | weak |
| 34.9 | 2.57 | weak |

In an analogous manner it is also possible to convert the crystal forms A, C, F, I and J into the B form, it being possible for those crystal forms still to be wet with solvent. In such cases the amount of water can be slightly increased.

### Example P5: Preparation of the compound of formula I wherein M is sodium, n is 1, r is 0 and s is 0 (C modification):

100 g of the K modification prepared according to Example P2 are mixed with 20 g of water for 3 hours and then dried at a temperature of 60°C and a pressure of 4 kPa.

**Table R5:**

| X-ray powder pattern of modification C: | | |
|---|---|---|
| 2θ [degrees] | d[Å] | Intensity |
| 6.7 | 13.1 | medium |
| 8.1 | 11.0 | very strong |
| 10.1 | 8.8 | weak |
| 11.4 | 7.7 | very strong |
| 12.2 | 7.2 | very strong |
| 12.7 | 7.0 | weak |
| 13.9 | 6.4 | weak |
| 14.3 | 6.2 | strong |
| 14.9 | 5.96 | weak |
| 15.0 | 5.90 | weak |
| 15.7 | 5.64 | strong |
| 16.2 | 5.47 | weak |
| 16.6 | 5.34 | medium |
| 17.1 | 5.19 | weak |
| 18.5 | 4.79 | weak |
| 18.7 | 4.74 | medium |
| 19.1 | 4.64 | very weak |
| 19.5 | 4.55 | strong |
| 19.9 | 4.47 | weak |
| 20.4 | 4.35 | strong |
| 20.8 | 4.26 | medium |
| 21.5 | 4.13 | weak |
| 21.9 | 4.06 | very weak |
| 22.7 | 3.92 | very strong |
| 23.0 | 3.87 | weak |
| 23.5 | 3.79 | very strong |
| 24.2 | 3.67 | weak |
| 24.6 | 3.61 | medium |
| 24.9 | 3.58 | strong |
| 25.7 | 3.47 | weak |
| 26.9 | 3.32 | very weak |
| 27.5 | 3.24 | medium |
| 28.4 | 3.14 | weak |
| 28.6 | 3.12 | weak |
| 29.1 | 3.07 | weak |
| 29.3 | 3.04 | strong |
| 30.1 | 2.97 | very weak |
| 30.6 | 2.92 | very weak |
| 31.0 | 2.88 | weak |
| 31.7 | 2.82 | weak |
| 32.3 | 2.77 | very weak |
| 32.7 | 2.74 | very weak |
| 33.3 | 2.69 | weak |
| 33.7 | 2.66 | very weak |

### Example P6: Preparation of the compound of formula I wherein M is sodium, n is 1, r is 0 and s is 0, in substantially amorphous form (A modification):

1.56 g of N-[(4,6-dimethoxy-2-pyrimidinyl)carbamoyl]-3-(2,2,2-trifluoroethoxy)-pyridine-2-sulfonamide are added at a temperature of 20°C to a solution of 40 ml of aqueous 0.1 N sodium hydroxide solution. The reaction mixture is stirred at a temperature of 20°C for 18 hours. The residue obtained after concentration by evaporation *in vacuo* at a temperature of 50°C is stirred with ether and filtered. The A modification is obtained by drying the filtrate at elevated temperatures (>120°C).

### Example P7: Preparation of the compound of formula I wherein M is sodium, n is 1, r is 0 and s is 0 (C modification) from the A modification:

Crystals of the A modification are exposed to a relative air humidity of 98 % for 4 hours at a temperature of 20°C. The C modification having the crystallographic data given under Example P5 is obtained.

### Example P8: Preparation of the compound of formula I wherein M is sodium, n is 1, r is 2, L is dioxane and s is 0 (G modification):

15 g of the A modification prepared, for example, according to Example P6 are stirred in 85 g of dioxane for 2 1/2 days at a temperature of 20°C and the mixture is then filtered. After filtration there is obtained as filtration residue the G modification having the X-ray crystallographic data given in Table R8:

**Table R8:**

| X-ray powder pattern of modification G: | | |
|---|---|---|
| 2θ [degrees] | d[Å] | Intensity |
| 5.8 | 15.3 | strong |
| 7.0 | 12.7 | very weak |
| 8.4 | 10.5 | weak |
| 11.1 | 7.9 | medium |
| 12.8 | 6.9 | medium |
| 13.4 | 6.6 | very weak |
| 14.3 | 6.2 | very strong |
| 14.9 | 5.96 | medium |
| 17.4 | 5.08 | medium |
| 17.8 | 4.98 | weak |
| 18.3 | 4.84 | medium |
| 19.3 | 4.60 | medium |
| 19.7 | 4.51 | medium |
| 19.8 | 4.47 | very weak |
| 20.8 | 4.27 | weak |
| 21.0 | 4.23 | medium |
| 22.3 | 3.98 | medium |
| 22.7 | 3.91 | medium |
| 23.3 | 3.81 | weak |
| 23.9 | 3.71 | strong |
| 24.4 | 3.65 | medium |
| 24.9 | 3.57 | weak |
| 25.4 | 3.50 | medium |
| 26.2 | 3.39 | very weak |
| 26.7 | 3.33 | weak |
| 28.9 | 3.08 | very weak |
| 29.5 | 3.02 | very weak |
| 30.5 | 2.93 | weak |

### Example P9: Preparation of the compound of formula I wherein M is sodium, n is 1, r is 1, L is dioxane and s is 0 (F modification):

The F modification is obtained by exposing the G modification prepared according to Example P8 to a temperature of 20-25°C and 50 % relative air humidity for a period of 8 days.

**Table R9:**

| X-ray powder pattern of modification G: | | |
|---|---|---|
| 2θ [degrees] | d[Å] | Intensity |
| 6.0 | 14.7 | very weak |
| 7.0 | 12.6 | very weak |
| 8.1 | 10.9 | medium |
| 11.4 | 7.8 | medium |
| 12.0 | 7.4 | very weak |
| 12.7 | 7.0 | weak |
| 13.4 | 6.6 | weak |
| 14.3 | 6.2 | weak |
| 16.2 | 5.45 | strong |
| 18.0 | 4.91 | medium |
| 18.4 | 4.83 | weak |
| 18.6 | 4.76 | very weak |
| 20.8 | 4.28 | very weak |
| 21.7 | 4.10 | weak |
| 22.2 | 4.00 | very weak |
| 23.7 | 3.75 | very strong |
| 24.7 | 3.60 | very weak |

### Biological Examples

### Example B1: Post-emergence herbicidal action on maize and soybeans:

In a greenhouse, the test plants are raised in standard soil in plastics pots and at the 2- to 3-leaf stage are sprayed with an aqueous suspension of the test compounds of formula I, prepared from a 75 % wettable granule formulation according to Example F4, F5 or F6, corresponding to a concentration of 30, 15 and 7.5 g active ingredient/ha (500 litres water/ha). The test plants are then grown on in the greenhouse under optimum conditions.

The test is evaluated after about 3 weeks. In this test the test plants, which are tolerant to acetolactate-synthase-inhibiting herbicides (ALS-inhibitors), exhibit good resistance to the phytotoxic action of the compounds of formula I, especially to the phytotoxic action of the compound of formula I wherein M is sodium, n is 1, L is tetrahydrofuran, r is 1/2 and s is 0 (J modification).

### Example B2: Post-emergence herbicidal action on rice:

Weeds are sown and raised in soil saturated with water in plastics troughs. The rice plants are sown and grown separately from the weeds and after 10 days transplanted into the plastics troughs containing the weeds. The test compounds are then applied to the plants in the form of an aqueous suspension. One day after application, the water level is raised by 3 cm (paddy system).

The test plants are then grown on in a greenhouse under optimum conditions. The test is evaluated after about 21 days (0 % denotes no action, 100 % indicates that the plant has completely died). In this test too, the test plants, which are tolerant to acetolactate-synthase-inhibiting herbicides (ALS-inhibitors), exhibit good resistance to the phytotoxic action of the compounds of formula I, especially to the phytotoxic action of the compound of formula I wherein M is sodium, n is 1, L is tetrahydrofuran, r is 1/2 and s is 0 (J modification).
Examples of the good selective action of the compounds of formula I are given in Table B1. For comparison with the prior art, the compound sulfometuron-methyl (known from The Pesticide Manual, 10^{th} ed., the British Crop Protection Council, page 931) is tested. Sulfometuron-methyl belongs to the same class of ALS-inhibitors as the compound of formula I. The compound of formula I and sulfometuron-methyl are tested at a rate of application of 8 g/ha.

The ALS-inhibitor-resistant rice variety used is *Oryza sativa*, Linnaeus name: SPCW-1, deposited under the number ATCC 97523, depositor: Louisiana State Univ. Agricultural and Mechanical College Isolation:
The variety "Lemont" is used as conventional rice variety.

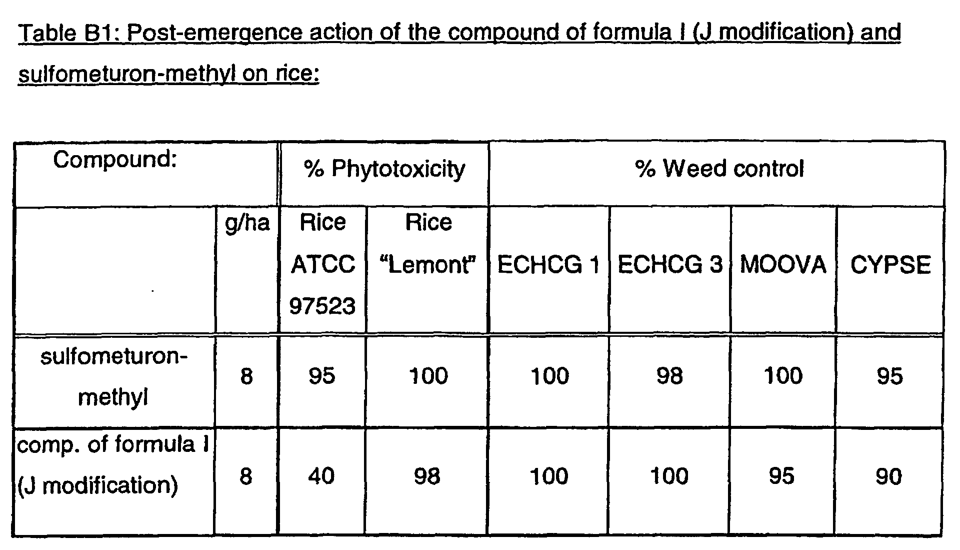

| **Weed name** | **Leaf stage at application** | **Height at application (cm)** |
|---|---|---|
| Echinochioa crus galli post 1.0 leaf (ECHCG 1) | 1.5 | 6 |
| Echinochloa crus galli post 3.0 leaf (ECHCG 3) | 3 | 25 |
| Monochoria vaginalls (MOOVA) | 2 | 1 |
| Cyperus serotinus (CYPSE) | 3 | 11 |

The results in Table B1 show that, at the rate of application tested, the two sulfonylureas completely destroy both the conventional "Lemont" rice variety and the weeds. Therefore the two compounds are, at this rate of application, unsuitable for the selective control of weeds in crops of conventional rice varieties. The ALS-inhibitor-resistant rice ATCC 97523 is likewise almost completely destroyed by sulfometuron-methyl (95 % phytotoxicity), whereas the compound of formula I, at a rate of application of 8 g/ha, surprisingly results in a phytotoxicity of only 40 % with this rice variety. The compounds of formula I are therefore especially suitable for use in ALS-resistant rice crops, while the sulfonylurea sulfometuron-methyl, which is structurally closely related to the compound of formula I, is completely unsuitable for such crops.

## Claims

1. A method of controlling undesirable plant growth in herbicide-tolerant crops of useful plants selected from maize, rice and soybeans, in which method a crystalline form of the compound of formula I 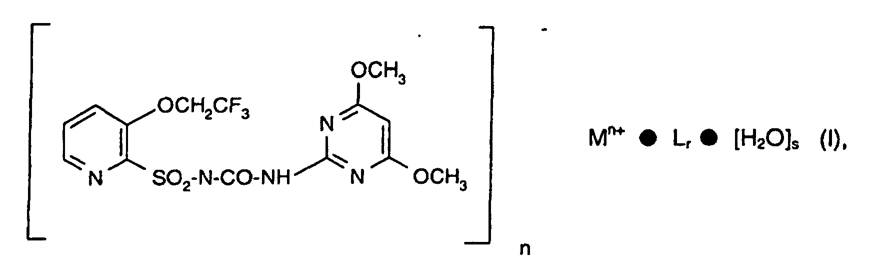 wherein
M is an alkali metal or alkaline earth metal;
n is 1 or 2;
r and s are each independently of the other 0, 1/2, 1, 1 1/2, 2, 2 1/2 or 3; and
L is ethyl acetate, acetonitrile, dimethyl sulfoxide, dimethylformamide, dimethylacetamide, N-methyl-2-pyrrolidone, acetone, butanone, methylene chloride, trichloromethane, trichloroethane, tetrahydrofuran, diethyl ether, 1,2-dimethoxyethane, dioxane, methyl tert-butyl ether, chlorobenzene, toluene or xylene, is applied in a herbicidally effective amount to the plants or to the locus thereof.

2. A method according to claim 1, wherein, in formula I, M is sodium, potassium, magnesium or calcium.

3. A method according to claim 1, wherein, in formula I, L is dioxane or tetrahydrofuran.

4. A method according to claim 1, wherein, in formula I, n is 1, M being sodium.

5. A method according to claim 1, wherein, in formula I, M is sodium, n is 1, r is 0 and s is 0.

6. A method according to claim 1, wherein the compounds of formula I are selected from
a) the B modification of the compound of formula I wherein M is sodium, n is 1, r is 0 and s is 1, **characterised by** the X-ray powder pattern having d[Å]/intensity: 10.0/medium; 9.2/strong; 8.6/very weak; 8.1/weak; 7.2/strong; 6.9/strong; 6.4/medium; 5.82/strong; 5.75/strong; 5.64/very strong; 5.53/very weak; 5.13/medium; 4.97/very strong; 4.65/medium; 4.30/very strong; 4.22/weak; 4.15/very weak; 4.02/weak; 3.94/weak; 3.79/medium; 3.73/weak; 3.68/medium; 3.61/weak; 3.58/weak; 3.52/very strong; 3.42/very weak; 3.37/weak; 3.31/very weak; 3.27/very weak; 3.23/weak; 3.18/medium; 3.08/very weak; 3.03/very weak; 2.95/very weak; 2.87/strong; 2.82/very weak; 2.79/very weak; 2.73/very weak; 2.68/very weak; 2.65/very weak; 2.63/very weak; 2.60/weak; 2.57/weak;
b) the J modification of the compound of formula I wherein M is sodium, n is 1, L is tetrahydrofuran, r is 1/2 and s is 0, **characterised by** the X-ray powder pattern having d[Å]/intensity: 15.7/weak; 10.2/very strong; 8.2/weak; 7.8/weak; 7.3/weak; 6.7/weak; 6.5/very weak; 6.2/medium; 5.64/very weak; 5.53/weak; 5.42/weak; 5.09/weak; 4.96/medium; 4.86/very weak; 4.60/medium; 4.37/medium; 4.24/weak; 4.11/very strong; 3.95/very weak; 3.90/weak; 3.81/very weak; 3.71/medium; 3.62/weak; 3.52/very weak; 3.43/strong; 3.37/weak; 3.32/very weak; 3.27/weak; 2.94/very weak; 2.82/medium;
c) the K modification of the compound of formula I wherein M is sodium, n is 1, r is 0 and s is 0, **characterised by** the X-ray powder pattern having d[Å]/intensity: 13.4/weak; 10.1/very weak; 9.3/very strong; 7.8/weak; 6.9/very weak; 6.7/very weak; 5.63/very weak; 5.35/medium; 4.66/weak; 4.44/very weak; 4.35/weak; 4.12/strong; 3,94/strong; 3.87/very weak; 3.76/weak; 3.61/medium; 3.49/very weak; 3.40/very weak;
d) the C modification of the compound of formula I wherein M is sodium, n is 1, r is 0 and s is 1, **characterised by** the X-ray powder pattern having d[Å]/intensity: 13.1/medium; 11.0/very strong; 8.8/weak; 7.7/very strong; 7.2/very strong; 7.0/weak; 6.4/weak; 6.2/strong; 5.96/weak; 5.90/weak; 5.64/strong; 5.47/weak; 5.34/medium; 5.19/weak; 4.79/weak; 4.74/medium; 4.64/very weak; 4.55/strong; 4.47/weak; 4.35/strong; 4.26/medium; 4.13/weak; 4.06/very weak; 3.92/very strong; 3.87/weak; 3.79/very strong; 3.67/weak; 3.61/medium; 3.58/strong; 3.47/weak; 3.32/very weak; 3.24/medium; 3.14/weak; 3.12/weak; 3.07/weak; 3.04/strong; 2.97/very weak; 2.92/very weak; 2.88/weak; 2.82/weak; 2.77/very weak; 2.74/very weak; 2.69/weak; 2.66/very weak; and
e) the I modification of the compound of formula I wherein M is sodium, n is 1, L is tetrahydrofuran, r is 1 and s is 1, **characterised by** the X-ray powder pattern having d[Å]/intensity: 11.6/weak; 9.8/very weak; 8.0/very strong; 7.6/medium; 6.7/strong; 6.4/very weak; 6.3/weak; 6.1/very weak; 5.80/medium; 5.66/very weak; 5.47/strong; 5.12/very weak; 5.08/very weak; 4.84/weak; 4.76/weak; 4.47/strong; 4.40/weak; 4.21/medium; 4.19/medium; 4.15/very weak; 4.00/very weak; 3.93/very weak; 3.84/medium; 3.72/very strong; 3.58/medium; 3.52/medium; 3.32/very weak; 3.28/very weak; 3.25/very weak; 3.11/very weak; 3.07/very weak; 2.95/very weak; 2.86/weak; 2.82/very weak; 2.75/very weak; 2.57/weak; 2.49/very weak.

7. A method according to claim 1, wherein, in formula I
a) M is sodium, n is 1, r is 0 and s is 0 (K modification), prepared by drying the compound of formula I wherein M is sodium, n is 1, L is tetrahydrofuran, r is 1/2 and s is 0 (J modification) at a temperature of from 35°C to 65°C *in vacuo*;
or wherein
b) M is sodium, n is 1, r is 0 and s is 1 (C modification), prepared by either
i) bringing the substantially amorphous form (A modification) into contact with air of 98 % relative humidity, or
ii) adding water to the K modification of the compound of formula I wherein M is sodium, n is 1, r is 0 and s is 0, in a ratio of water to K modification of from 0.1 : 1 to 0.4 : 1 and separating off and drying the resulting product at a temperature of 30-90°C and a pressure of from (0.01 to 0.1 bar) 1 to 10 kPa;
or wherein
c) M is sodium, n is 1, r is 0 and s is 1 (B modification), prepared by adding water to the compound of formula I wherein M is sodium, n is 1 and L, rand s are as defined for formula I, in a ratio of water to that compound of from 0.5 : 1 to 20 : 1, filtering, and drying the filtration residue at a temperature of 30-90°C and a pressure of from (0.01 to 0.1 bar) 1 to 10 kPa.

8. A method according to claim 1, wherein the useful plants are crops resistant to the inhibition of acetolactate synthase (ALS).

9. The use of a compound of formula I according to claim 1, in controlling undesirable plant growth in herbicide-tolerant crops of useful plants selected from maize, rice and soybeans.

## Patentansprüche

1. Verfahren zum Bekämpfen von unerwünschtem Pflanzenwuchs bei Herbizid-toleranten Kulturen von Nutzpflanzen, ausgewählt aus Mais, Reis und Sojabohnen, wobei in dem Verfahren eine kristalline Form der Verbindung der Formel I 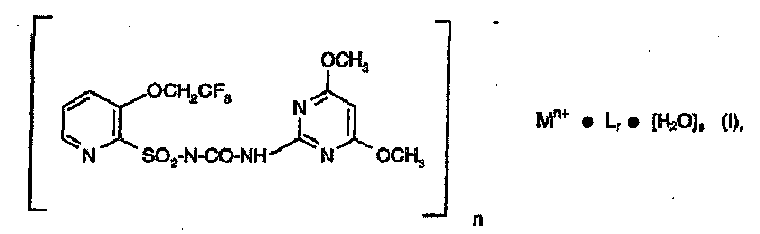 worin
M ein Alkalimetall oder Erdalkalimetall darstellt;
n 1 oder 2 ist;
r und s jeweils unabhängig voneinander 0, ½, 1, 1½, 2, 2½ oder 3 sind; und
L Essigsäureethylester, Acetonitril, Dimethylsulfoxid, Dimethylformamid, Dimethylacetamid, N-Methyl-2-pyrrglidon, Aceton, Butanon, Methylenchlorid, Trichlormethan, Trichlorethan, Tetrahydrofuran, Diethylether, 1,2-Dimethoxyethan, Dioxan, Methyl-tert-butylether, Chlorbenzol, Toluol oder Xylol darstellt, in einer herbizid wirksamen Menge auf die Pflanzen oder deren Standort appliziert wird.

2. Verfahren nach Anspruch 1, wobei in Formel I M Natrium, Kalium, Magnesium oder Calcium darstellt.

3. Verfahren nach Anspruch 1, wobei in Formel I L Dioxan oder Tetrahydrofuran darstellt.

4. Verfahren nach Anspruch 1, wobei in Formel I n 1 ist, wobei M Natrium darstellt.

5. Verfahren nach Anspruch 1, wobei in Formel I M Natrium darstellt, n 1 ist, r 0 ist und s 0 ist.

6. Verfahren nach Anspruch 1, wobei die Verbindungen der Formel I ausgewählt sind aus
a) der B-Modifikation der Verbindung der Formel I, worin M Natrium darstellt, n 1 ist, r 0 ist und s 1 ist, **gekennzeichnet durch** das Röntgenbeugungspulvermuster mit d[Å]/Intensität: 10,0/mittel; 9,2/stark; 8,6/sehr schwach; 8,1/schwach; 7,2/stark; 6,9/stark; 6,4/mittel; 5,82/stark; 5,75/stark; 5,64/sehr stark; 5,53/sehr schwach; 5,13/mittel; 4,97/sehr stark; 4,65/mittel; 4,30/sehr stark; 4,22/schwach; 4,15/sehr schwach; 4,02/schwach; 3,94/schwach; 3,79/mittel; 3,73/schwach; 3,68/mittel; 3,61/schwach; 3,58/schwach; 3,52/sehr stark; 3,42/sehr schwach; 3,37/schwach; 3,31/sehr schwach; 3,27/sehr schwach; 3,23/schwach; 3,18/mittel; 3,08/sehr schwach; 3,03/sehr schwach; 2,95/sehr schwach; 2,87/stark; 2,82/sehr schwach; 2,79/sehr schwach; 2,73/sehr schwach; 2,68/sehr schwach; 2,65/sehr schwach; 2,63/sehr schwach; 2,60/schwach; 2,57/schwach;
b) der J-Modifikation der Verbindung der Formel I, worin M Natrium darstellt, n 1 ist, L Tetrahydrofuran darstellt, r ½ ist und s 0 ist, **gekennzeichnet durch** das Röntgenbeugungspulvermuster mit d[Å]/Intensität: 15,7/schwach; 10,2/sehr stark; 8,2/schwach; 7,8/schwach; 7,3/schwach; 6,7/schwach; 6,5/sehr schwach; 6,2/mittel; 5,64/sehr schwach; 5,53/schwach; 5,42/schwach; 5,09/schwach; 4,96/mittel; 4,86/sehr schwach; 4,60/mittel; 4,37/mittel; 4,24/schwach; 4,11/sehr stark; 3,95/sehr schwach; 3,90/schwach; 3,81/sehr schwach; 3,71/mittel; 3,62/schwach; 3,52/sehr schwach; 3,43/stark; 3,37/schwach; 3,32/sehr schwach; 3,27/schwach; 2,94/sehr schwach; 2,82/mittel;
c) der K-Modifikation der Verbindung der Formel I, worin M Natrium darstellt, n 1 ist, r 0 ist und s 0 ist, **gekennzeichnet durch** das Röntgenbeugungspulvermuster mit d[Å]/Intensität: 13,4/schwach; 10,1/sehr schwach; 9,3/sehr stark; 7,8/schwach; 6,9/sehr schwach; 6,7/sehr schwach; 5,63/sehr schwach; 5,35/mittel; 4,66/schwach; 4,44/sehr schwach; 4,35/schwach; 4,12/stark; 3,94/stark; 3,87/sehr schwach; 3,76/schwach; 3, 61/mittel; 3,49/sehr schwach; 3,40/sehr schwach;
d) der C-Modifikation der Verbindung der Formel I, worin M Natrium darstellt, n 1 ist, r 0 ist und s 1 ist, **gekennzeichnet durch** das Röntgenbeugungspulvermuster mit d[Å]/Intensität: 13,1/mittel; 11,0/sehr stark;' 8,8/schwach; 7,7/sehr stark; 7,2/sehr stark; 7,0/schwach; 6,4/schwach; 6,2/stark; 5,96/schwach; 5,90/schwach; 5,64/stark; 5,47/schwach; 5,34/mittel; 5,19/schwach; 4,79/schwach; 4,74/mittel; 4,64/sehr schwach; 4,55/stark; 4,47/schwach; 4,35/stark; 4,26/mittel; 4,13/schwach; 4,06/sehr schwach; 3,92/sehr stark; 3,87/schwach; 3,79/sehr stark; 3,67/schwach; 3,61/mittel; 3,58/stark; 3,47/schwach; 3,32/sehr schwach; 3,24/mittel; 3,14/schwach; 3,12/schwach; 3,07/schwach; 3,04/stark; 2,97/sehr schwach; 2,92/sehr schwach; 2,88/schwach; 2,82/schwach; 2,77/sehr schwach; 2,74/sehr schwach; 2,69/schwach; 2,66/sehr schwach; und
e) der I-Modifikation der Verbindung der Formel I, worin M Natrium darstellt, n 1 ist, L Tetrahydrofuran darstellt, r 1 ist und s 1 ist, **gekennzeichnet durch** das Röntgenbeugungspulvermuster mit d[Å]/Intensität: 11,6/schwach; 9,8/sehr schwach; 8,0/sehr stark; 7,6/mittel; 6,7/stark; 6,4/sehr schwach; 6,3/schwach; 6,1/sehr schwach; 5,80/mittel; 5,66/sehr schwach; 5,47/stark; 5,12/sehr schwach; 5,08/sehr schwach; 4,84/schwach; 4,76/schwach; 4,47/stark; 4,40/schwach; 4,21/mittel; 4,19/mittel; 4,15/sehr schwach; 4,00/sehr schwach; 3,93/sehr schwach; 3,84/mittel; 3,72/sehr stark; 3,58/mittel; 3,52/mittel; 3,32/sehr schwach; 3,28/sehr schwach; 3,25/sehr schwach; 3,11/sehr schwach; 3,07/sehr schwach; 2,95/sehr schwach; 2,86/schwach; 2,82/sehr schwach; 2,75/sehr schwach; 2,57/schwach; 2,49/sehr schwach.

7. Verfahren nach Anspruch 1, wobei in Formel I
a) M Natrium darstellt, n 1 ist, r 0 ist und s 0 ist (K-Modifikation), hergestellt durch Trocknen der Verbindung der Formel I, worin M Natrium darstellt, n 1 ist, L Tetrahydrofuran darstellt, r ½ ist und s 0 ist (J-Modifikation), bei einer Temperatur von 35°C bis 65°C im Vakuum;
oder worin
b) M Natrium darstellt, n 1 ist, r 0 ist und s 1 ist (C-Modifikation), hergestellt durch entweder
i) Bringen der im Wesentlichen amorphen Form (A-Modifikation) in Kontakt mit Luft von 98% relativer Feuchtigkeit, oder
ii) Zugeben von Wasser zu der K-Modifikation der Verbindung der Formel I, worin M Natrium darstellt, n 1 ist, r 0 ist und s 0 ist, in einem Verhältnis von Wasser zur K-Modifikation von 0,1:1 bis 0,4:1 und Abtrennen und Trocknen des erhaltenen Produkts bei einer Temperatur von 30-90°C und einem Druck von (0,01 bis 0,1 bar) 1 bis 10 kPa;
oder worin
c) M Natrium darstellt, n 1 ist, r 0 ist und s 1 ist (B-Modifikation), hergestellt durch Zugeben von Wasser zu der Verbindung der Formel I, worin M Natrium darstellt, n 1 ist, L, r und s wie für Formel I definiert sind, in einem Verhältnis von Wasser zu der Verbindung von 0,5:1 bis 20:1, Filtrieren und Trocknen des Filterrückstands bei einer Temperatur von 30-90°C und einem Druck von (0,01 bis 0,1 bar) 1 bis 10 kPa.

8. Verfahren nach Anspruch 1, wobei die Nutzpflanzen Kulturen darstellen, die gegen die Inhibierung von Acetolactatsynthase (ALS) resistent sind.

9. Verwendung einer Verbindung der Formel I nach Anspruch 1 beim Bekämpfen von unerwünschtem Pflanzenwuchs in Herbizid-toleranten Kulturen von Nutzpflanzen, ausgewählt aus Mais, Reis und Sojabohnen.

## Revendications

1. Procédé de lutte contre la croissance indésirable de végétaux dans des cultures tolérantes aux herbicides de plantes utiles choisies dans le groupe composé de maïs, de riz et de soja, procédé dans lequel une forme cristalline du composé de formule I 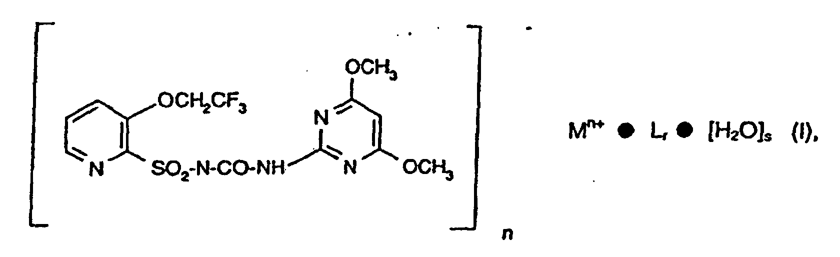 dans laquelle
M est un métal alcalin ou un métal alcalino-terreux ;
n est 1 ou 2 ;
r et s sont chacun indépendamment l'un de l'autre 0, ½, 1, 1½, 2, 2½ ou 3 ; et L est de l'acétate d'éthyle, de l'acétonitrile, du sulfoxyde de diméthyle, du diméthylformamide, du diméthylacétamide, N-méthyl-2-pyrrolidone, de l'acétone, du butanone, du chlorure de méthylène, du trichlorométhane, du trichloroéthane, du tétrahydrofuranne, de l'éther diéthylique, 1,2-diméthoxyéthane, du dioxanne, de l'oxyde de méthyle et de tert-butyle, du chlorobenzène, du toluène ou du xylène, est appliqué en quantité herbicidement efficace sur les plantes ou sur l'emplacement de celles-ci.

2. Procédé selon la revendication 1, dans lequel, dans la formule I, M est du sodium, du potassium, du magnésium ou du calcium.

3. Procédé selon la revendication 1, dans lequel, dans la formule I, L est du dioxanne ou du tétrahydrofuranne.

4. Procédé selon la revendication 1, dans lequel, dans la formule I, n est 1, M étant du sodium.

5. Procédé selon la revendication 1, dans lequel, dans la formule I, M est du sodium, n est 1, r est 0 et s est 0.

6. Procédé selon la revendication 1, dans lequel les composés de formule I sont choisis à partir de a) la modification B du composé de formule I dans laquelle M est du sodium, n est 1, r est 0 et s est 1, **caractérisée par** le diffractogramme de rayons X sur poudre ayant d[Å]/intensité : 10,0/moyenne ; 9,2/forte ; 8,6/très faible ; 8,1/faible ; 7,2/forte ; 6,9/forte ; 6,4/moyenne ; 5,82/forte ; 5,75/forte ; 5,64/ très forte ; 5,53/très faible ; 5,13/moyenne ; 4,97/très forte ; 4,65/moyenne ; 4,30/très forte ; 4,22/faible ; 4,15/très faible ; 4,02/faible ; 3,94/faible ; 3,79/moyenne ; 3,73/faible ; 3,68/moyenne ; 3,61/faible ; 3,58/faible ; 3,52/très forte ; 3,42/très faible ; 3,37/faible ; 3,31/très faible ; 3,27/très faible ; 3,23/faible ; 3,18/moyenne ; 3,08/très faible ; 3,03/très faible ; 2,95/très faible ; 2,87/forte ; 2,82/très faible ; 2,79/très faible ; 2,73/très faible ; 2,68/très faible ; 2,65/très faible ; 2,63/très faible ; 2,60/faible ; 2,57/faible ; b) la modification J du composé de formule I dans laquelle M est du sodium, n est 1, L est du tétrahydrofuranne, r est ½ et s est 0, **caractérisée par** le diffractogramme de rayons X sur poudre ayant d[Å]/intensité : 15,7/faible ; 10,2/très forte ; 8,2/faible ; 7,8/faible ; 7,3/faible ; 6,7/faible ; 6,5/très faible ; 6,2/moyenne ; 5,64/très faible ; 5,53/faible ; 5,42/faible ; 5,09/faible ; 4,96/moyenne ; 4,86/très faible ; 4,60/moyene ; 4,37/moyenne ; 4,24/faible ; 4,11/très forte ; 3,95/très faible ; 3,90/faible ; 3,81/très faible ; 3,71/moyenne ; 3,62/faible ; 3,52/très faible ; 3,43/forte ; 3,37/faible ; 3,32/très faible ; 3,27/faible ; 2,94/très faible ; 2,82/moyenne ; c) la modification K du composé de formule I dans laquelle M est du sodium, n est 1, r est 0 et s est 0, **caractérisée par** le diffractogramme de rayons X sur poudre ayant d[Å]/intensité : 13,4/faible ; 10,1/très faible ; 9,3/très forte ; 7,8/faible ; 6,9/très faible ; 6,7/très faible ; 5,63/très faible ; 5,35/moyenne ; 4,66/faible ; 4,44/très faible ; 4,35/faible ; 4,12/forte ; 3,94/forte ; 3,87/très faible ; 3,76/faible ; 3,61/moyenne ; 3,49/très faible ; 3,40/très faible ; d) la modification C du composé de formule I dans laquelle M est du sodium, n est 1, r est 0 et s est 1, **caractérisée par** le diffractogramme de rayons X sur poudre ayant d[Å]/intensité : 13,1/moyenne ; 11,0/très forte ; 8,8/faible ; 7,7/très forte ; 7,2/très forte ; 7,0/faible ; 6,4/faible ; 6,2/forte ; 5,96/faible ; 5,90/faible ; 5,64/forte ; 5,47/faible ; 5,34/moyenne ; 5,19/faible ; 4,79/faible ; 4,74/moyenne ; 4,64/très faible ; 4,55/forte ; 4,47/faible ; 4,35/forte ; 4,26/moyenne ; 4,13/faible ; 4,06/très faible ; 3,92/très forte ; 3,87/faible ; 3,79/très forte ; 3,67/faible ; 3,61/moyenne ; 3,58/forte ; 3,47/faible ; 3,32/très faible ; 3,24/moyenne ; 3,14/faible ; 3,12/faible ; 3,07/faible ; 3,04/forte ; 2,97/très faible ; 2,92/très faible ; 2,88/faible ; 2,82/faible ; 2,77/très faible ; 2,74/très faible ; 2,69/faible ; 2,66/très faible ; et e) la modification I du composé de formule I dans laquelle M est du sodium, n est 1, L est du tétrahydrofuranne, r est 1 et s est 1, **caractérisée par** le diffractogramme de rayons X sur poudre ayant d[Å]/intensité : 11,6/faible ; 9,8/très faible ; 8,0/très forte ; 7,6/moyenne ; 6,7/forte ; 6,4/très faible ; 6,3/faible ; 6,1/très faible ; 5,80/moyenne ; 5,66/très faible ; 5,47/forte ; 5,12/très faible ; 5,08/très faible ; 4,84/faible ; 4,76/faible ; 4,47/forte ; 4,40/faible ; 4,21/moyenne ; 4,19/moyenne ; 4,15/très faible ; 4,00/très faible ; 3,93/très faible ; 3,84/moyenne ; 3,72/très forte ; 3,58/moyenne ; 3,52/moyenne ; 3,32/très faible ; 3,28/très faible ; 3,25/très faible ; 3,11/très faible ; 3,07/très faible ; 2,95/très faible ; 2,86/faible ; 2,82/très faible ; 2,75/très faible ; 2,57/faible ; 2,49/très faible.

7. Procédé selon la revendication 1, dans lequel, dans la formule I,
a) M est du sodium, n est 1, r est 0 et s est 0 (modification K), préparée en séchant le composé de formule I dans laquelle M est du sodium, n est 1, L est du tétrahydrofuranne, r est ½ et s est 0 (modification J) à une température comprise entre 35 °C et 65 °C in vacuo ; ou dans lequel
b) M est du sodium, n est 1, r est 0 et s est 1 (modification C), préparée soit i) en portant la forme substantiellement amorphe (modification A) en contact avec de l'air d'humidité relative de 98 %, ou ii) en ajoutant de l'eau à la modification K du composé de formule I dans laquelle M est du sodium, n est 1, r est 0 et s est 0, le rapport entre l'eau est la modification K étant compris entre 0,1/1 et 0,4/1 et en séparant et en séchant le produit obtenu à une température comprise entre 30 et 90 °C et à une pression comprise entre 1 et 10 kPa (0,01 et 0,1 bar) ; ou dans laquelle
c) M est du sodium, n est 1, r est 0 et s est 1 (modification B), préparée en ajoutant de l'eau au composé de formule I dans laquelle M est du sodium, n est 1 et L, r et s sont tels que définis pour la formule I, le rapport entre l'eau et ce composé étant compris entre 0,5/1 et 20/1, en filtrant et en séchant le résidu de filtration à une température comprise entre 30 et 90 °C et à une pression comprise entre 1 et 10 kPa (0,01 et 0,1 bar).

8. Procédé selon la revendication 1, dans lequel les plantes utiles sont des cultures résistantes à l'inhibition de l'acétolactate-synthase (ALS).

9. Utilisation d'un composé de formule I selon la revendication 1, dans le contrôle de la croissance indésirable de végétaux dans des cultures tolérantes aux herbicides de plantes utiles choisies entre le maïs, le riz et le soja.
